# EUROPEAN PATENT APPLICATION

(11) **EP 4 811 858 A1**
(43) Date of publication of application: **23.09.2026**
(21) Application number: 24906201.9
(22) Date of filing: 11.12.2024
(51) Int. Cl.: H04W 28/06

(54) **METHOD FOR PROCESSING DATA PACKET, AND COMMUNICATION APPARATUS**

(30) Priority: 19.12.2023 CN 202311758063
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2024/138421
(87) International publication number: WO 2025/130718

(57) **Abstract**

This application provides a data packet processing method, which can be applied to the transmission of uplink data packets in a wireless communication system. **In** this solution, when congestion occurs in an uplink data transmission network, a terminal device properly discards uplink data packets according to a packet discarding ratio, thereby alleviating network congestion while avoiding loss of valid information in the uplink data packets. This not only improves the reliability of uplink data transmission, but also further ensures user experience. The method includes: after obtaining a packet discarding ratio and determining a packet discarding policy, the terminal device discards data packets in an uplink data packet set according to the data packet discarding ratio and the data packet discarding policy.

## Description

This application claims priority to Chinese Patent Application No. 202311758063.9, filed with the China National Intellectual Property Administration on December 19, 2023 and entitled "DATA PACKET PROCESSING METHOD AND COMMUNICATION APPARATUS", which is incorporated herein by reference in its entirety.

### TECHNICAL FIELD

This application relates to the communication field, and more specifically, to a data packet processing method and communication apparatus.

### BACKGROUND

The 3rd generation partnership project (3rd generation partnership project, 3GPP) defines that a quality of service (QoS) flow of an extended reality (XR) service may include protocol data unit (PDU) sets of different importance levels, which are identified by PDU set importance (PDU set importance, PSI). When network congestion occurs, the transmission of data with high importance should be preferentially guaranteed. Therefore, 3GPP proposes that when network congestion occurs, the transmission of data packets with low importance may be preferentially discarded. For example, in uplink data transmission, the terminal device may actively discard all data with low importance when network congestion occurs, to alleviate the pressure on transmission resources.

However, this discarding is not lossless, because even data of relatively low importance still carries useful content information. When such data is discarded, the receiving side cannot properly restore the corresponding content, which may cause problems such as video freezing, black borders, or blurring. Therefore, how to avoid the loss of valid information when network congestion occurs, and ensure user experience, is a problem that needs to be solved.

### SUMMARY

This application provides a data packet processing method and a communication apparatus, to improve reliability of uplink data transmission and user experience.

According to a first aspect, an embodiment of this application provides a data packet processing method. The method may be performed by a terminal device, or may be performed by a component (for example, a chip or a circuit) of the terminal device. This is not limited in this application. For ease of description, the following uses an example in which the method is performed by the terminal device for illustration. The method includes: obtaining a data packet discarding ratio by a terminal device; determining a data packet discarding policy by the terminal device; and performing data packet discarding from data packet set(s) based on the data packet discarding ratio and the data packet discarding policy by the terminal device.

Based on the foregoing solution, the terminal device can perform uplink packet discarding management when network congestion occurs according to the data packet discarding ratio and the data packet discarding policy. Compared with the solution in the prior art in which all data packets in a data packet set of low importance are discarded, the solution in this application can perform more reasonable data packet discarding management by using different data packet discarding ratios and data packet discarding policies. The solution in this application improves stability of uplink data transmission when network congestion occurs, thereby improving user experience.

With reference to the first aspect, in some implementations of the first aspect, the data packet discarding policy is: discarding data packet(s) from low-importance data packet set(s) of the data packet set(s), corresponding to the data packet discarding ratio; or discarding data packet(s) from high-importance data packet set(s) of the data packet set(s), corresponding to the data packet discarding ratio; or discarding data packet(s) from high-importance data packet set(s) of the data packet set(s), corresponding to the data packet discarding ratio, and discarding all data packet(s) from low-importance data packet set(s) of the data packet set(s); or discarding data packet(s) from each of the data packet set(s), corresponding to the data packet discarding ratio; or discarding data packet(s) from high-importance data packet set(s) of the data packet set(s), corresponding to a first data packet discarding ratio, and discarding data packet(s) from low-importance data packet set(s) of the data packet set(s), corresponding to a second data packet discarding ratio, wherein the first data packet discarding ratio and the second data packet discarding ratio belong to the data packet discarding ratio.

Compared to the prior art where all data packets in a set of low-importance data packets are discarded, the data packet discarding policy provided by the solution of this application refines the data packet discarding behavior of the terminal device in different scenarios. For example, different data packet discarding policies are selected based on different levels of network congestion, thereby enhancing the flexibility and rationality of data packet discarding management.

With reference to the first aspect, in some implementations of the first aspect, the obtaining a data packet discarding ratio by a terminal device comprises: receiving data packet discarding ratio information by the terminal device from a network device, wherein the data packet discarding ratio information indicates the data packet discarding ratio, and the data packet discarding ratio information configures the terminal device to discard data packets based on the data packet discarding ratio.

With reference to the first aspect, in some implementations of the first aspect, the obtaining a data packet discarding ratio by the terminal device comprises: receiving configuration information by the terminal device from a network device, wherein the configuration information configures the terminal device or the component of the terminal device to perform data packet discarding based on a redundancy degree of the data packet set(s); obtaining the redundancy degree by the terminal device; and determining the data packet discarding ratio based on the redundancy degree by the terminal device. Optionally, under an architecture of CU-DU separation, the network device is a central unit-user plane function (CU-UP) network element, or a central unit-control plane function (CU-CP) network element, or a distributed unit (DU) network element.

Based on the aforementioned solution, the terminal device can obtain the data packet discarding ratio through the two methods mentioned above, thereby enhancing the reliability of the implementation of this application.

With reference to the first aspect, in some implementations of the first aspect, the obtaining the redundancy degree by the terminal device comprises: receiving redundancy degree information by the terminal device from an application layer, wherein the redundancy degree information indicates the redundancy degree; and determining the redundancy degree based on the redundancy degree information by the terminal device.

With reference to the first aspect, in some implementations of the first aspect, the data packet discarding ratio is less than or equal to the redundancy degree.

When the data packet discarding ratio is less than or equal to the redundancy degree of the data packets, the integrity of the information transmitted in the undiscarded data packets can be further ensured, thereby avoiding the loss of valid information and improving the reliability of the method according to this application.

With reference to the first aspect, in some implementations of the first aspect, the method further includes: reporting capability information to the network device by the terminal device, wherein the capability information indicates whether the terminal device has a capability of identifying the redundancy degree information. Optionally, under a CU-DU separation architecture, the network device is a central unit-control plane function (CU-CP) network element.

The capability information may enable the network device to determine, based on the capability of the terminal device, whether to configure the terminal device to discard packets based on the data packet discarding ratio, thereby avoiding invalid indication and configuration by the network device, and improving system reliability.

With reference to the first aspect, in some implementations of the first aspect, the method further includes: receiving, by the terminal device, first indication information from a network device, where the first indication information indicates the terminal device to start packet discarding, and the network device is a CU-CP or a DU.

The first indication information is used to indicate the terminal device to start a packet discarding behavior, so that the terminal device can obtain the data packet discarding ratio information from the network device in advance when no network congestion occurs, or obtain in advance that a data packet needs to be discarded based on the redundancy degree of the data packet set, so that when network congestion occurs, the terminal device can quickly respond to the first indication information to perform packet discarding, thereby improving reliability of network management of data packets. In addition, by initiating packet discarding through the first indication information, the terminal device can also receive different first indication information schemes at different moments, so that the terminal device can further adjust a packet discarding policy based on network congestion degrees at different moments, thereby improving flexibility of packet discarding management.

With reference to the first aspect, in some implementations of the first aspect, the first indication information further indicates the data packet discarding policy, and the determining a data packet discarding policy by the terminal device comprises: determining a data packet discarding policy based on the first indication information by the terminal device.

With reference to the first aspect, in some implementations of the first aspect, the method further includes: receiving, by the terminal device, identifier information corresponding to the data packet set(s) from the network device, wherein the identifier information is at least one of: an identifier of the terminal device receiving the data packet set(s), a session identifier of a protocol data unit PDU session corresponding to the data packet set(s), a flow identifier of a quality of service QoS flow corresponding to the data packet set(s), and an identifier of a data radio bearer DRB corresponding to the data packet set(s). Optionally, in a CU-DU separation architecture, the network device is a CU-UP, a CU-CP, or a DU.

With reference to the first aspect, in some implementations of the first aspect, the method further includes: receiving, by the terminal device, third indication information from the network device, where the third indication information instructs the terminal device to stop data packet discarding. Optionally, in a CU-DU separation architecture, the network device is a CU-CP or a DU.

By using the third indication information, the behavior of continuing to discard data packets after the network congestion disappears can be avoided, thereby further achieving the purpose of improving the reliability of packet discarding management.

According to a second aspect, an embodiment of this application provides a data packet processing method. The method may be performed by a network device, or may be performed by a component (for example, a chip or a circuit) of the network device. This is not limited in this application. For ease of description, the following provides an example of performance by the network device for illustration. The method includes: obtaining, by a network device, a redundancy degree of data packet set(s); determining, by the network device, a data packet discarding ratio based on the redundancy degree, wherein the data packet discarding ratio is used for data packet discarding; and sending, by the network device, data packet discarding ratio information to a terminal device, wherein the data packet discarding ratio information indicates the data packet discarding ratio, and the data packet discarding ratio information configures the terminal device to perform data packet discarding based on the data packet discarding ratio. Optionally, under a CU-DU separation architecture, the network device is a central unit - control plane function (CU-CP) network element.

Based on the foregoing solution, the data packet discarding ratio is determined by using the redundancy degree of the data packet set, so that the solution provided in this application can avoid loss of valid information when data packet discarding occurs, and is more reasonable and reliable compared with the prior art.

With reference to the second aspect, in some implementations of the second aspect, the data packet discarding ratio is less than or equal to the redundancy degree.

With reference to the second aspect, in some implementations of the second aspect, the method further includes: sending, by the network device, first indication information to the terminal device, wherein the first indication information indicates the terminal device to start data packet discarding.

With reference to the second aspect, in some implementations of the second aspect, the first indication information further indicates a data packet discarding policy.

With reference to the second aspect, in some implementations of the second aspect, the data packet discarding policy is: discarding data packet(s) from low-importance data packet set(s) of the data packet set(s), corresponding to the data packet discarding ratio; or discarding data packet(s) from high-importance data packet set(s) of the data packet set(s), corresponding to the data packet discarding ratio; or discarding data packet(s) from high-importance data packet set(s) of the data packet set(s), corresponding to the data packet discarding ratio, and discarding all data packet(s) from low-importance data packet set(s) of the data packet set(s); or discarding data packet(s) from each of the data packet set(s), corresponding to the data packet discarding ratio; or discarding data packet(s) from high-importance data packet set(s) of the data packet set(s), corresponding to a first data packet discarding ratio, and discarding data packet(s) from low-importance data packet set(s) of the data packet set(s), corresponding to a second data packet discarding ratio, wherein the first data packet discarding ratio and the second data packet discarding ratio belong to the data packet discarding ratio.

With reference to the second aspect, in some implementations of the second aspect, the method further includes: sending, by the network device to the terminal device, identifier information corresponding to the data packet set(s), wherein the identifier information is at least one of: a session identifier of a protocol data unit PDU session corresponding to the data packet set(s), a flow identifier of a quality of service QoS flow corresponding to the data packet set(s), and an identifier of a data radio bearer DRB corresponding to the data packet set(s).

With reference to the second aspect, in some implementations of the second aspect, the method further includes: sending, by the network device, third indication information to the terminal device, wherein the third indication information indicates the terminal device to stop data packet discarding.

According to a third aspect, an embodiment of this application provides a data packet processing method. The method may be performed by a network device, or may be performed by a component (for example, a chip or a circuit) of the network device. This is not limited in this application. For ease of description, the following provides an example for description in which the method is performed by the network device. The method includes: determining, by a network device, that a redundancy degree of data packet set(s) exists; sending, by a network device, configuration information to a terminal device, wherein the configuration information configures the terminal device to perform data packet discarding based on the redundancy degree of the data packet set(s), the redundancy degree is used to determine a data packet discarding ratio, and the data packet discarding ratio is used for data packet discarding.

With reference to the third aspect, in some implementations of the third aspect, the data packet discarding ratio is less than or equal to the redundancy degree.

With reference to the third aspect, in some implementations of the third aspect, the method further includes: receiving, by the network device, capability information from the terminal device, wherein the capability information indicates whether the terminal device has a capability of identifying redundancy degree information.

With reference to the third aspect, in some implementations of the third aspect, the method further includes: sending, by the network device, first indication information to the terminal device, wherein the first indication information indicates the terminal device to start data packet discarding.

With reference to the third aspect, in some implementations of the third aspect, the first indication information further indicates a data packet discarding policy.

With reference to the third aspect, in some implementations of the third aspect, the data packet discarding policy is: discarding data packet(s) from low-importance data packet set(s) of the data packet set(s), corresponding to the data packet discarding ratio; or discarding data packet(s) from high-importance data packet set(s) of the data packet set(s), corresponding to the data packet discarding ratio; or discarding data packet(s) from high-importance data packet set(s) of the data packet set(s), corresponding to the data packet discarding ratio, and discarding all data packet(s) from low-importance data packet set(s) of the data packet set(s); or discarding data packet(s) from each of the data packet set(s), corresponding to the data packet discarding ratio; or discarding data packet(s) from high-importance data packet set(s) of the data packet set(s), corresponding to a first data packet discarding ratio, and discarding data packet(s) from low-importance data packet set(s) of the data packet set(s), corresponding to a second data packet discarding ratio, wherein the first data packet discarding ratio and the second data packet discarding ratio belong to the data packet discarding ratio.

With reference to the third aspect, in some implementations of the third aspect, the method further includes: sending, by the network device to the terminal device, identifier information corresponding to the data packet set(s), wherein the identifier information is at least one of: a session identifier of a protocol data unit PDU session corresponding to the data packet set(s), a flow identifier of a quality of service QoS flow corresponding to the data packet set(s), and an identifier of a data radio bearer DRB corresponding to the data packet set(s).

With reference to the third aspect, in some implementations of the third aspect, the method further includes: sending, by the network device, third indication information to the terminal device, wherein the third indication information indicates the terminal device to stop data packet discarding.

According to a fourth aspect, an embodiment of this application provides a first communication device. The first communication device is configured to perform the first aspect and any one of the implementations of the first aspect. Specifically, the first communication device includes a processor and a memory, where the memory is configured to store a computer program; and the processor is configured to invoke the computer program from the memory and run the computer program, so that the first communication device performs the first aspect and any one of the implementations of the first aspect.

According to a fifth aspect, an embodiment of this application provides a second communication device. The second communication device is configured to perform the second aspect and any one of the implementations of the second aspect, or is configured to perform the third aspect and any one of the implementations of the third aspect. Specifically, the second communication device includes a processor and a memory, where the memory is configured to store a computer program; and the processor is configured to invoke the computer program from the memory and run the computer program, so that the second communication device performs the second aspect and any one of the implementations of the second aspect, or so that the second communication device performs the third aspect and any one of the implementations of the third aspect.

According to a sixth aspect, an embodiment of this application provides a communication apparatus. The communication apparatus is configured to perform the method provided in the first aspect and any one of the implementations of the first aspect. Specifically, the communication apparatus may include units and/or modules (for example, a processing unit and a transceiver unit) configured to perform the method provided in the first aspect and any one of the implementations of the first aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, an embodiment of this application provides a communication apparatus. The communication apparatus is configured to perform the method provided in any one of the second aspect and the implementations thereof, or the communication apparatus is configured to perform the method provided in any one of the third aspect and the implementations thereof. Specifically, the communication apparatus may include a unit and/or a module (for example, a processing unit or a transceiver unit) configured to perform the method provided in any one of the second aspect and the implementations thereof, or the communication apparatus may include a unit and/or a module (for example, a processing unit or a transceiver unit) configured to perform the method provided in any one of the third aspect and the implementations thereof.

In an implementation, the communication apparatus is a network device. When the communication apparatus is a network device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a network device. In this case, the transceiver unit may be an input/output interface, an interface circuit, an output circuit, an input circuit, a pin, or a related circuit on the chip, the chip system, or the circuit; and the processing unit may be at least one processor, a processing circuit, a logic circuit, or the like.

According to an eighth aspect, an embodiment of this application provides a processor, configured to perform the method provided in at least one of the first aspect, the second aspect, and the third aspect.

Unless otherwise specified, or if an operation such as sending and obtaining/receiving performed by the processor does not conflict with an actual function or internal logic of the operation in the related description, the operation may be understood as an operation such as output, reception, or input performed by the processor, or may be understood as a sending and receiving operation performed by a radio frequency circuit and an antenna. This is not limited in this application.

According to a ninth aspect, an embodiment of this application provides a computer program product comprising instructions. When the computer program product is run on a computer, the computer is enabled to perform the method provided in at least one of the first aspect, the second aspect, and the third aspect, and any implementation of each aspect.

According to a tenth aspect, an embodiment of this application provides a communication system, including the first communication device according to the fourth aspect and the second communication device according to the fifth aspect.

According to an eleventh aspect, an embodiment of this application provides a communication system, including the first communication device according to the fourth aspect and the second communication apparatus according to the sixth aspect.

According to a twelfth aspect, a chip is provided. The chip includes a processor and a communication interface. The processor reads an instruction by using the communication interface, and performs the method provided in at least one of the first aspect, the second aspect, and the third aspect, and any implementation of each aspect.

Optionally, in an implementation, the chip further includes a memory, where the memory stores a computer program or an instruction, the processor is configured to execute the computer program or the instruction stored in the memory, and when the computer program or the instruction is executed, the processor is configured to perform the method provided in at least one of the first aspect, the second aspect, and the third aspect, and any implementation of each aspect.

According to a thirteenth aspect, an embodiment of this application provides a computer readable storage medium. The computer readable storage medium stores a computer program. When the computer program runs on the communication apparatus, the communication apparatus is enabled to perform the method in at least one of the first aspect, the second aspect, and the third aspect, and any implementation of each aspect.

The technical effects of the second aspect to the thirteenth aspect may be referred to the technical effects of the first aspect, and details are not described herein again.

### BRIEF DESCRIPTION OF DRAWINGS

FIG. 1 is a schematic diagram of a communication architecture to which an embodiment of this application is applicable;
FIG. 2 is a schematic diagram of a base station CU-DU separation architecture to which an embodiment of this application is applicable;
FIG. 3 is a schematic diagram of a 5G XR communication architecture to which an embodiment of this application is applicable;
FIG. 4 is a schematic diagram of an XR downlink service model provided by 3GPP and applicable to an embodiment of this application;
FIG. 5 is a schematic diagram of a video coding model to which an embodiment of this application is applicable;
FIG. 6 is a schematic diagram of network coding to which an embodiment of this application is applicable;
FIG. 7 is a schematic flowchart of a first packet processing method 700 according to an embodiment of this application;
FIG. 8 is a schematic diagram of a bitmap applicable to an embodiment of this application.
FIG. 9 is a schematic flowchart of a second packet processing method 900 according to an embodiment of this application;
FIG. 10 is a schematic flowchart of a third packet processing method 1000 according to an embodiment of this application;
FIG. 11 is a schematic flowchart of a fourth packet processing method 1100 according to an embodiment of this application;
FIG. 12 is a schematic block diagram of a communication apparatus 1200 according to an embodiment of this application;
FIG. 13 is a schematic block diagram of another communication apparatus according to an embodiment of this application.

### DESCRIPTION OF EMBODIMENTS

The following describes the technical solutions of this application with reference to the accompanying drawings.

The technical solutions in the embodiments of this application may be applied to various communication systems, for example, non-terrestrial network (non-terrestrial network, NTN) systems such as a satellite communication system, a high altitude platform (high altitude platform station, HAPS) communication system, and an unmanned aerial vehicle (UAV) system, an integrated communication and navigation (integrated communication and navigation, ICAN) system, a global navigation satellite system (global navigation satellite system, GNSS) and an ultra-dense low orbit satellite communication system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a 5G system or a communication system evolved after 5G, such as a 6G communication system, and vehicle-to-everything (vehicle-to-everything, V2X), where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, a long term evolution-vehicle (long term evolution-vehicle, LTE-V) system, an Internet of Vehicles system, machine type communication (machine type communication, MTC), an Internet of Things (Internet of things, IoT) system, a long term evolution-machine (long term evolution-machine, LTE-M) system, a machine to machine (machine to machine, M2M) system, and the like.

The terminal device in the embodiments of this application may also be referred to as user equipment (user equipment, UE), an access terminal, a mobile device, a user terminal, a terminal, a wireless communication device, a user agent, or a user apparatus.

For example, some examples of terminals are: a virtual reality (virtual reality, VR) device, an augmented reality (augmented reality, AR) device, a terminal device in a 5th generation (5th generation, 5G) network, a terminal device in a future evolved public land mobile network (public land mobile network, PLMN), or the like. This is not limited in embodiments of this application.

As an example instead of a limitation, in the embodiments of this application, the terminal device may alternatively be a wearable device. The wearable device may also be referred to as a wearable intelligent device, and is a general term of wearable devices that are developed through intelligent design (using wearable technologies) for daily wear, such as glasses, gloves, watches, clothes, and shoes. The wearable device is a portable device that can be directly worn on a body or integrated into clothes or accessories of a user. The wearable device is not only a hardware device, but also implements powerful functions through software support, data exchange, and cloud interaction. In a broad sense, wearable intelligent devices include full-featured and large-sized devices that can implement complete or partial functions without depending on smartphones, for example, smart watches or smart glasses; and full-featured and small-sized devices that focus on only one type of application function and need to work in conjunction with another device such as a smartphone, for example, various smart bands or smart jewelry for monitoring physical signs.

In the embodiments of this application, the apparatus configured to implement the functions of the terminal device may be the terminal device itself, or may be an apparatus capable of supporting the terminal device in implementing the function, for example, a chip system or a chip. This apparatus may be installed in the terminal device. In the embodiments of this application, the chip system may be composed of a chip, or may include a chip and other discrete components.

The network device in the embodiments of this application may be any communication device capable of communicating with a terminal device and having a wireless transceiver function, and may be an access network (radio access network, RAN) device deployed on a satellite, or may be an access network device deployed on the ground. The access network device includes but is not limited to: an evolved NodeB (evolved Node B, eNB), a radio network controller (radio network controller, RNC), a NodeB (Node B, NB), a base station controller (base station controller, BSC), a base transceiver station (base transceiver station, BTS), a home evolved NodeB (home evolved NodeB, HeNB, or home Node B, HNB), a baseband unit (baseband unit, BBU), an access point (access point, AP) in a wireless fidelity (wireless fidelity, WIFI) system, a wireless relay node, a wireless backhaul node, a transmission point (transmission point, TP), a transmission and reception point (transmission and reception point, TRP), or the like. Alternatively, the network device may be a 5G network device, for example, a gNB in an NR system, an antenna panel of one or a group (including a plurality of antenna panels) of antenna panels in a base station in a 5G system, or may be a network node that forms a gNB or a transmission point, for example, a baseband unit (BBU) or a distributed unit (distributed unit, DU).

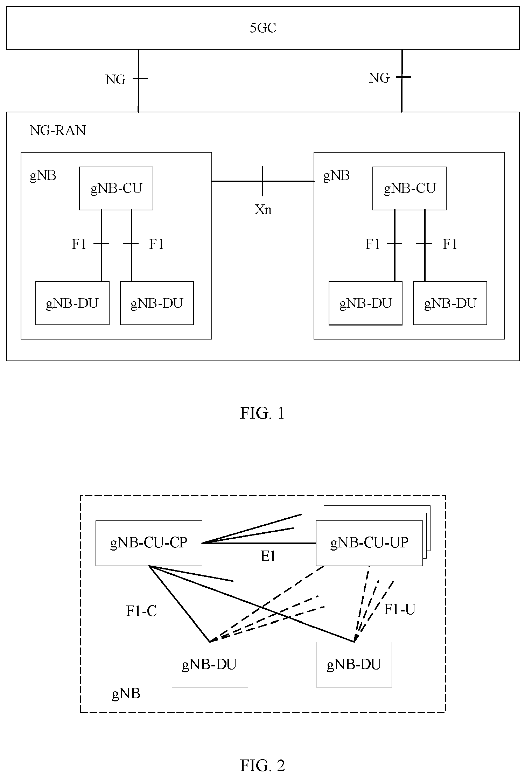

It should be noted that, in this application, an example of a 5G base station is used to illustrate the embodiments of this application, as shown in FIG. 1. In a 5G system, the base station is referred to as gNB/ng-eNB, and mainly includes radio resource control (radio resource control, RRC), service data adaptation protocol (service data adaptation protocol, SDAP), packet data convergence protocol (packet data convergence protocol, PDCP), radio link control (radio link control, RLC), media access control (media access control, MAC), and a physical layer (physical, PHY). These may be collectively represented by gNB, and gNBs are connected through an Xn interface. The gNB is connected to the 5G core network through an NG interface. In some deployments, the gNB may be composed of a centralized unit (Centralized Unit, CU) and a distributed unit (Distributed Unit, DU), that is, the functions of the base station in the original access network are split, where some functions of the base station are deployed in a CU, and the remaining functions are deployed in a DU. Multiple DUs share one CU, which can reduce costs and facilitate network expansion. The CU and DU may be split according to the protocol stack, where one possible way is to deploy the RRC, SDAP, and PDCP layers in the CU, while the remaining RLC, MAC, and PHY layers are deployed in the DU. The CU and DU are connected through an F1 interface. The CU on behalf of the gNB is connected to the core network through the NG interface, the CU on behalf of the gNB is connected to other gNBs through the Xn interface, and the CU may also represent the gNB to perform a dual connectivity operation by connecting to other eNBs through the X2 interface.

Furthermore, as shown in Figure 2, the CU can be further divided into a control plane (CU-CP) and a user plane (CU-UP). The CU-CP is responsible for control plane functions, mainly including RRC and the control plane corresponding PDCP, i.e., PDCP-C. PDCP-C is primarily responsible for encryption and decryption, integrity protection, and data transmission of control plane data. The CU-UP is responsible for user plane functions, mainly including SDAP and the user plane corresponding PDCP, i.e., PDCP-U. SDAP is mainly responsible for processing data from the core network and mapping the flows to bearers. PDCP-U is mainly responsible for encryption and decryption, integrity protection, header compression, sequence number maintenance, and data transmission on the user plane. The CU-CP and CU-UP are connected through an E1 interface. The CU-CP and CU-UP are connected to the core network through an NG interface. The control plane, i.e., F1-C, is connected to the DU through an F1 interface. The CU-UP is connected to the DU through the user plane, i.e., F1-U, through an F1 interface. Of course, another possible implementation is that PDCP-C is also located in the CU-UP.

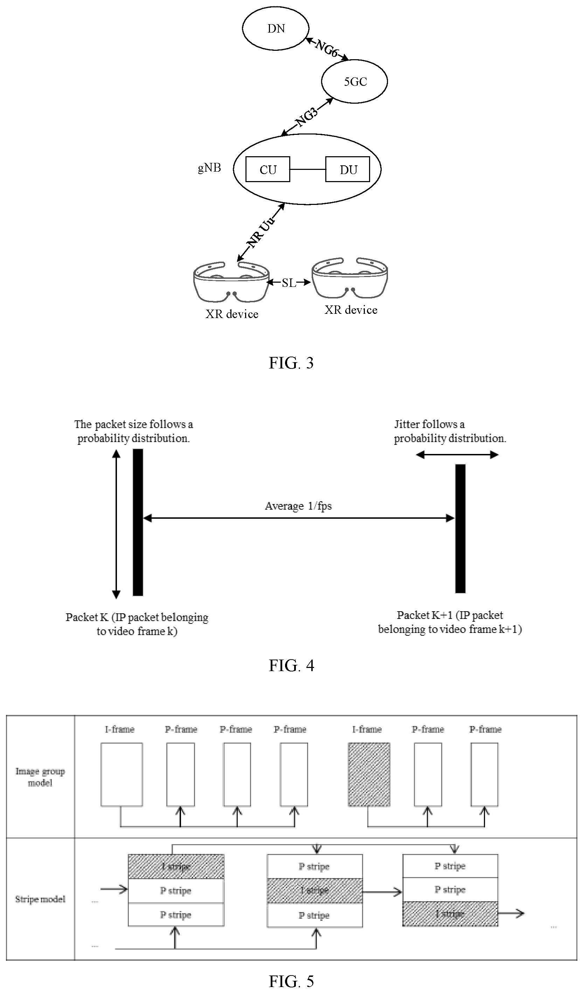

The solution of this application may be applied to a communication system as shown in Figure 3. For example, in Figure 3, for a service, the following behavior is illustrated: data is generated by an application server, forwarded through a data network (Data Network, DN), sent to the core network via an N6 interface, and then the core network transfers the data to the base station through an N3 interface. The base station then sends the data to the UE through the Uu air interface. In addition, for sidelink communication (sidelink, SL), communication occurs between user communication devices (e.g., XR devices) and user communication devices (e.g., XR devices).

It can be understood that FIG. 3 is merely an example and does not limit the application scenarios of this application. The core network device herein refers to a device in the core network (core network, CN) that provides service support for the terminal. Currently, some examples of core network devices include an access and mobility management function (access and mobility management function, AMF) entity, a session management function (session management function, SMF) entity, a user plane function (user plane function, UPF) entity, and the like, which are not exhaustively listed herein. Among them, the AMF entity may be responsible for access management and mobility management of the terminal; the SMF entity may be responsible for session management, such as session establishment for a user; the UPF entity may be a user plane functional entity, mainly responsible for connecting to an external network. It should be noted that an entity in this application may also be referred to as a network element or a functional entity. For example, the AMF entity may also be referred to as an AMF network element or an AMF functional entity, and the SMF entity may also be referred to as an SMF network element or an SMF functional entity, and so on.

To facilitate an understanding of the embodiments of this application, a brief introduction to the concepts and technologies involved in the embodiments of this application is first provided.

### 1. XR

XR can refer to an environment where reality and virtuality are combined through computing technologies and wearable devices, and where interaction between humans and machines occurs. This is specifically manifested in several typical forms: VR, AR, and MR. XR is one of the key 5G multimedia applications currently under consideration in the industrial sector. 3GPP Rel-17 has conducted modeling and analysis on the service characteristics of XR. Typically, XR services generate data frames periodically at a certain frame rate. Taking an AR service with a frame rate of 60 fps as an example, 60 video frames are generated per second, with a video frame appearing approximately every 16.66 ms. A video frame may be transmitted through multiple data packets, which may be divided into one or more PDU sets. The size of the data frame is not fixed; it usually follows a truncated Gaussian distribution. The mean can be expressed as mean = R/F, where F is the frame rate and R is the data rate. For example, with F = 60 fps and R = 20 Mbps, mean = 41.67 Kbytes, and the size of the data frame typically ranges between 0.5 * mean and 1.5 * mean. Figure 4 illustrates a schematic diagram of the XR downlink service model provided by 3GPP. From this diagram, it can be observed that the size of XR service data packets follows a certain probability distribution and arrives at the base station side at an average interval of 1/fps.

### 2. Importance of PDU Sets

XR services may generate data periodically. For example, an uplink AR service may periodically generate data frames, where the data frames may be transmitted at the access layer by multiple data packets, and these data packets may form one or more PDU sets. One PDU set may correspond to one or more data packets. A PDU set contains data corresponding to an application layer information element, where an application layer information element is the smallest granularity for application layer encoding and decoding, for example, a video frame, a video coding slice, or a video coding block. If a PDU set corresponds to multiple data packets, these multiple data packets may be transmitted at the access layer in a sequential manner, with each data packet being the granularity of transmission.

In XR services, data of different importance levels may appear in the same data stream. This is caused by the encoding method used by the application. Taking an XR video service as an example, the application may use inter-frame predictive coding during data encoding to reduce the amount of data to be transmitted. In simple terms, this type of coding method leverages the fact that most content in adjacent video frames remains unchanged, and thus only the data of the changed parts in the frame are transmitted, while the unchanged parts directly use the previously transmitted data. For example, in live video, the background usually remains unchanged. Therefore, only the complete data of the first video frame needs to be transmitted, while subsequent video frames only need to transmit the data of the changing foreground objects. The background data does not need to be transmitted again, and the receiver's player can directly use the background data from the first frame to generate the subsequent video frames.

One of these is a classic encoding method based on group of picture (GOP) encoding. In this encoding method, a GOP includes several consecutive video frames, where the first frame is referred to as an intra-coded picture (I) frame, which uses intra-frame coding and contains complete image information, allowing for independent encoding and decoding. The remaining frames are called predictive-coded picture (P) frames, which use predictive coding and contain only partial image information, thus requiring reference to previous frames for encoding and decoding. In another similar encoding method, a video frame is divided into multiple video slices (slices), where some slices use intra-frame coding and others use predictive coding, referred to as I-slices and P-slices, respectively. The encoding and decoding of the P-slices in subsequent frames depend on the I-slices at the corresponding positions in the preceding frames. Specifically, the dependency relationships of the encoding and decoding of the two types of video frames mentioned above are illustrated in Figure 5.

It should be noted that one frame or one slice may correspond to one or more PDU sets when being transmitted in a wireless network. The encoding model of XR video reflects the unequal importance of data. Since the correct decoding of a P-frame/P-slice depends on the correct decoding of an I-frame/I-slice, I-frame/I-slice data has higher importance during data transmission. Therefore, when network congestion occurs, the reliable transmission of I-frame/I-slice should be ensured as a priority to guarantee service experience.

To distinguish the unequal importance of different data within the same data stream, 3GPP has introduced the concept of PDU set importance (PDU set importance, PSI). According to the 3GPP protocol 23.700, a QoS flow of an XR service may include PDU sets with different levels of importance, which are identified by PSI. For example, in an XR video stream, the PSI of the PDU set corresponding to an I-frame/I-slice may be stronger than that of the PDU set corresponding to a P-frame/P-slice, because the encoding and decoding of P-frames/P-slices depend on I-frames/I-slices. Therefore, I-frame/I-slice data has higher importance. For downlink data transmission, the PSI corresponding to each PDU set is provided by the CN to the RAN, while for uplink data transmission, the PSI corresponding to each PDU set is identified by the terminal device itself.

### 3. Network Coding:

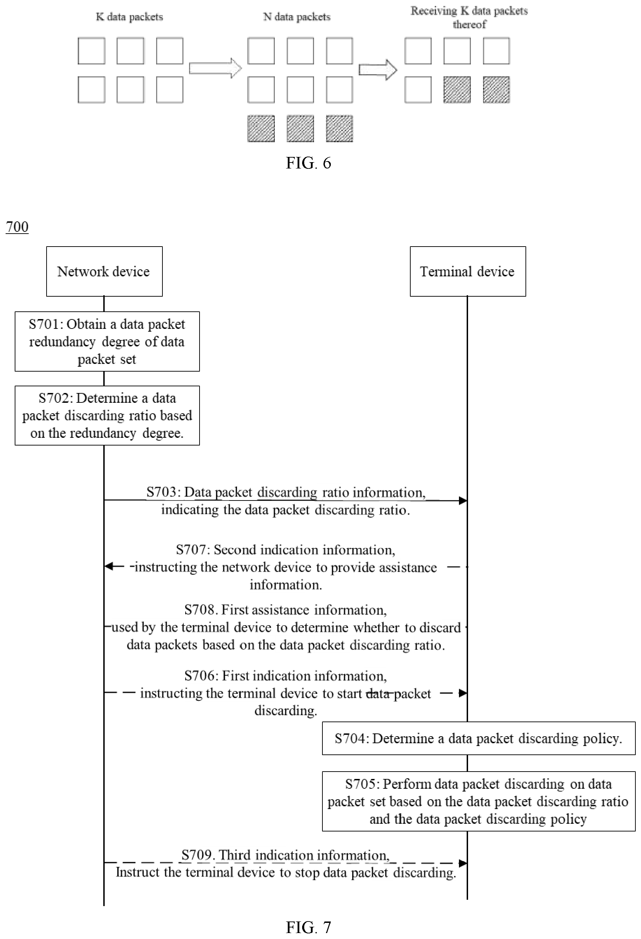

To improve the reliability of XR service transmission, the application server may use network coding to transmit XR service data, as shown in Figure 6. Network coding can be simply understood as increasing the redundancy degree of data through coding techniques. In Figure 6, K original data packets are encoded into N data packets using network coding technology. The receiver can recover the complete content of the K original data packets as long as they receive M out of the N data packets. Here, N is greater than K, and (N-K)/N or (N-M)/N is referred to as the redundancy degree of the network coding. Depending on the algorithm implementation, the M data packets can be any M out of the N data packets, or they may need to be M consecutive data packets, where M is usually greater than or equal to K. In some implementations, the redundancy remains fixed during the service process, while in other implementations, the redundancy dynamically changes during the service process.

Currently, for uplink data transmission, the terminal device may discard less important data packets after network congestion occurs, in order to alleviate the pressure on transmission resources, thereby allowing more resources to be used for transmitting high-priority data, and thus making every effort to ensure user experience.

However, this kind of discarding is not lossless and will still lead to a degradation in user experience. This is because even data with lower importance, such as P-frames or P-slices, still carry useful content information. When these data are discarded, the receiving device may be unable to properly recover the corresponding content, resulting in issues such as video stuttering, black borders, or blurring.

In view of this, this application provides a data packet processing method and a communication apparatus, which can enable a terminal device to discard redundant data packets in a reasonable proportion when network congestion occurs during the transmission of uplink data packets, thereby achieving alleviation of network congestion while ensuring no loss of data, thus guaranteeing user experience.

FIG. 7 is a schematic flowchart of a first packet processing method 700 according to an embodiment of this application. As shown in FIG. 7, the schematic flowchart is illustrated by using interaction between a network device and a terminal device in a 5G base station as an example. Steps performed by the network device and/or the terminal device may be performed by modules or units in the network device and/or the terminal device, for example, performed by a chip in the network device and/or the terminal device. Specifically, the method includes the following multiple steps.

S701. The network device obtains redundancy of a data packet set.

Optionally, the network device obtains the redundancy degree of the data packet set by receiving the redundancy degree information from the core network device, for example, obtains the redundancy by receiving the redundancy degree information carried in a PDU SESSION SETUP/MODIFICATION REQUEST message from the SMF.

In some embodiments, the redundancy degree information may be at a UE level, a PDU session (session) level, a QoS flow level, or a data radio bearer (data radio bearer, DRB) level. Specifically, when the redundancy degree information is at a UE level, the redundancy degree information is applicable to all uplink data packet sets of a specific UE; or when the redundancy degree information is at a PDU session level, a QoS flow level, or a DRB level, the redundancy degree information is applicable to an uplink data packet set transmitted in a specific PDU session, a specific QoS flow, or a specific DRB. Alternatively, in some other embodiments, the redundancy degree information may be different for different PSI values, different PSI ranges (ranges), or different importance levels, or there may be different redundancy information. This is not limited in this application.

Specifically, the redundancy degree information indicates the redundancy degree of the data packet set. In an implementable manner, the redundancy degree information sent by the core network device may be one or more of the number K of original data packets, the number N of encoded data packets, and the number M of data packets required for recovering the complete data packet set. In this case, the network device may determine the redundancy degree of the data packet set based on one or more of the received K, N, and M. In another implementable manner, the redundancy degree information sent by the core network device may directly be the redundancy degree of the data packet set. In this case, the network device may directly determine the redundancy degree of the data packet set based on the received redundancy information. In yet another implementable manner, the redundancy degree information sent by the core network device may be a range of redundancy of the data packet set. For example, the redundancy degree information indicates that the redundancy is between 10% and 30%. In this case, the network device may determine any redundancy within the redundancy range. In yet another implementable manner, the redundancy degree information sent by the core network device may indicate that network coding is used for the data packet set. For example, the redundancy degree information sent by the core network device indicates that the FEC technology is applied to the data packet set. In this case, the network device may determine an empirical redundancy based on previous experience.

It should be noted that a data packet set includes data packets generated after one-time network coding. For example, one data packet set corresponds to one PDU set, and in this case, one data packet set includes all data packets in the PDU set. Alternatively, one data packet set corresponds to a plurality of PDU sets, and in this case, one data packet set includes some or all data packets in the plurality of PDU sets. Alternatively, one data packet set corresponds to some data packets in one PDU set, and in this case, one data packet set includes some data packets in the PDU set. In other words, a relationship between the data packet set and the PDU set is not limited in this application.

For example, the data packet set may also be referred to as an FEC data set, a network coded data set, an FEC data group, or a network coded data group. This is not limited in this application.

It should be noted that, in the solutions of this application, different data packet sets may have different importance. For example, when there is a correspondence between a data packet set and a PDU set, importance of a data packet set may depend on importance of one or more PDU sets corresponding to the data packet set. Specifically, when one data packet set corresponds to one PDU set, importance of the data packet set depends on importance of the PDU set. When one data packet set corresponds to a plurality of PDU sets, importance of the data packet set depends on importance of the plurality of PDU sets. When one data packet set corresponds to some data packets in one PDU set, importance of the data packet set depends on importance of the PDU set. For example, importance of a data packet set may further depend on redundancy of the data packet set. Specifically, when redundancy of a data packet set is relatively high, importance of the data packet set is relatively low. When redundancy of a data packet set is relatively low, importance of the data packet set is relatively high.

It should also be noted that this application does not limit the method for determining the importance of a data packet set. For example, when the importance of a data packet set depends on the importance of one or more PDU sets corresponding to the data packet set, the importance of the data packet set may be characterized by using a value of the PSI that indicates the importance of the PDU set. Specifically, if the data packet set corresponds to a PDU set with a PSI value of 5, the importance of the data packet set is equal to 5. If the data packet set corresponds to multiple PDU sets, a minimum value, a median value, an average value, or the like among the multiple PSI values corresponding to the multiple PDU sets may be used as the importance of the data packet set.

In addition, the importance of the data packet set may be autonomously determined by the terminal device, or the importance of the data packet set may be autonomously determined by the network device or preset in the network device according to a protocol and then sent to the terminal device. The entity determining the importance of the data packet set is not limited in this application.

S702. The network device determines a data packet discarding ratio based on the redundancy degree.

Specifically, the data packet discarding ratio is a proportion of data packets discarded by the terminal device in the data packet set. Optionally, the data packet discarding ratio may be equal to or less than a redundancy degree provided by the core network device.

It should be noted that, in the solution of this application, a quantity of packet discarding ratios determined by the network device based on the redundancy is not limited. There may be one or more packet discarding ratios.

In some embodiments, when there is one data packet discarding ratio, in an implementable manner, the data packet discarding ratio may be corresponding to all data packet sets, that is, a same data packet discarding ratio is used for both a high-importance data packet set and a low-importance data packet set. In this case, for any data packet set, the data packet discarding ratio is a proportion of discarded data packets in all data packets in the any data packet set. For example, for a DRB level (that is, a DRB-level packet discarding behavior), for example, the DRB #1 includes the data packet set # 1, the data packet set # 2, and the data packet set # 3, if the data packet discarding ratio is 30%, 30% of the data packets in the data packet set # 1 will be discarded, 30% of the data packets in the data packet set # 2 will be discarded, and 30% of the data packets in the data packet set # 3 will be discarded. In another possible implementation, the data packet discarding ratio is corresponding to a data packet set of specific importance. In this case, for the data packet set of specific importance, the data packet discarding ratio is a proportion of a discarded data packet in all data packets of any data packet set of specific importance. Specifically, if the data packet discarding ratio is corresponding to a low-importance data packet set, a packet discarding ratio of each low-importance data packet set is the data packet discarding ratio. For example, for a DRB level, for example, a DRB#1, includes data packet set # 1, data packet set # 2, and data packet set # 3, where data packet set # 1 and data packet set # 3 are low importance data packet sets, and if the data packet discarding ratio is 30%, 30% of data packets in the data packet set # 1 are discarded, and 30% of the packets in packet set # 3 will be discarded.

In some embodiments, when there are a plurality of data packet discarding ratios, the plurality of data packet discarding ratios correspond to data packet sets with different importance levels. In this case, one of the plurality of data packet discarding ratios may correspond to a data packet set with at least one importance level. For example, at the DRB level, for example, DRB#1, data packet set #1, data packet set #2, and data packet set #3 are included. Data packet set #1 and data packet set #3 are low-importance data packet sets, and data packet set #2 is a high-importance data packet set. If the data packet discarding ratios are 30% for low-importance and 20% for high-importance, then 30% of the data packets in the data packet set #1 and data packet set #3 will be discarded, and 20% of the data packets in the data packet set #2 will be discarded. For another example, at the DRB level, for example, DRB#1, data packet set #1, data packet set #2, data packet set #3, and data packet set #4 are included. An importance value of the data packet set #1 is 5, an importance value of the data packet set #2 is 8, an importance value of the data packet set #3 is 2, and an importance value of the data packet set #4 is 15. If the data packet discarding ratios are 30% for low-importance and 20% for high-importance, and if the data packet set #1, the data packet set #2, and the data packet set #3 are high-importance data packets, and the data packet set #2 is a low-importance data packet (a determination of the importance level is not limited in this application), then 20% of the data packets in the data packet set #1, the data packet set #2, and the data packet set #3 will be discarded, and 30% of the data packets in the data packet set #4 will be discarded.

S703: The network device sends data packet discarding ratio information to the terminal device, where the data packet discarding ratio information indicates a packet discarding ratio.

Optionally, the network device may send the data packet discarding ratio information to the terminal device in a form such as RRC signaling, a PDCP control PDU, or a media access control layer control element (medium access control control element, MAC CE).

Optionally, the data packet discarding ratio information carries a specific packet discarding ratio. For example, when the data packet discarding ratio information carries 20%, the data packet discarding ratio information indicates that the data packet discarding ratio is 20%. Optionally, the data packet discarding ratio information is an index value corresponding to the data packet discarding ratio. For example, when the mapping relationship between the data packet discarding ratio and the index value is as shown in Table 1, and the data packet discarding ratio information carries 1, the data packet discarding ratio information indicates that the data packet discarding ratio is 20%.

**Table 1**

| Index | 0 | 1 | 2 | 3 |
|---|---|---|---|---|
| Packet discarding ratio | 10% | 20% | 30% | 40% |

It may be understood that Table 1 is merely an example provided in an embodiment of this application, and does not limit the protection scope of this application. In other words, there may be another correspondence between the data packet discarding ratio and the index value, which is not limited in this application.

In the embodiments of this application, the data packet discarding ratio information may be at a UE level, that is, the data packet discarding ratio is applicable to all uplink data sent by the UE; or the data packet discarding ratio information may be at a PDU session level, a DRB level, or a QoS flow level, that is, the data packet discarding ratio is applicable only to data of a specified PDU session, DRB, or QoS flow.

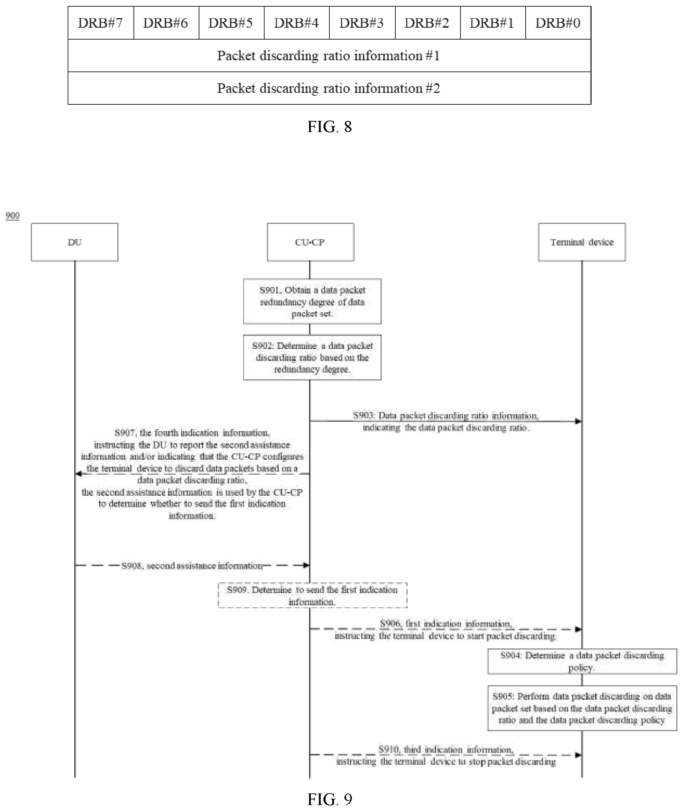

Optionally, when the data packet discarding ratio is indicated at a PDU session level, a DRB level, or a QoS flow level, the data packet discarding ratio information may further carry corresponding identification information, for example, at least one of a PDU session ID, a DRB ID, and a QoS flow ID, to identify a PDU session, a DRB, or a QoS flow for which the data packet discarding ratio information is intended. Alternatively, the network device uses a bitmap (bitmap) to indicate a correspondence between the data packet discarding ratio information and the PDU session, the DRB, or the QoS flow, so that the terminal device can learn, based on the bitmap, which PDU sessions, DRBs, or QoS flows the network device has configured the data packet discarding ratio information for. When the correspondence between the data packet discarding ratio information and the PDU session, the DRB, or the QoS flow is indicated according to the bitmap, the data packet discarding ratio information received by the terminal device may be sent by the network device in an order, so that after receiving the bitmap, the terminal device can determine, based on the bitmap and an order of the received packet discarding ratio information, the PDU session, the DRB, or the QoS flow for which the data packet discarding ratio information is carried. For example, as shown in FIG. 8, for eight DRBs from DRB#0 to DRB#7, the network device uses a bitmap 00010001 to indicate that the data packet discarding ratio information is configured for DRB#0 and DRB#4, and the subsequent packet discarding ratio information #1 and packet discarding ratio information #2 are respectively the data packet discarding ratio information corresponding to DRB#0 and DRB#4.

It may be understood that the data packet discarding ratio information provided for a UE, a PDU session, a DRB, or a QoS flow may indicate one or more packet discarding ratios. For example, the data packet discarding ratio information carries one or more packet discarding ratios, or carries one or more index values. When only one packet discarding ratio is indicated, it indicates that the data packet discarding ratio is the same for each data packet set; or when multiple packet discarding ratios are indicated, the multiple packet discarding ratios may respectively correspond to data packet sets with different importance. For example, when the importance of a data packet set continues to be characterized by a value of a PSI that indicates the importance of the PDU set, the multiple packet discarding ratios may correspond to different PSI values or different PSI levels (or ranges).

It may be understood that when the network device sends the data packet discarding ratio information to the terminal device, the terminal device may determine, based on the data packet discarding ratio information, that the network device expects the terminal device to discard packets according to the data packet discarding ratio. In other words, the data packet discarding ratio is used to configure the terminal device to discard packets according to the data packet discarding ratio.

S704: The terminal device determines a packet discarding policy.

Specifically, after receiving the data packet discarding ratio information, the terminal device determines the data packet discarding policy.

In an implementable manner, the terminal device determines the data packet discarding policy as discarding the data packets corresponding to the data packet discarding ratio in all data packet sets. In this case, the data packet discarding policy determined by the terminal device is for all data packet sets, that is, under this policy, the terminal device does not consider the importance of the data packet sets. For example, when the data packet discarding ratio information received by the terminal device is at a DRB level, the terminal device determines to discard the data packets corresponding to the data packet discarding ratio in each data packet set in the DRB.

In another implementable manner, the terminal device determines the data packet discarding policy as discarding the data packets corresponding to the data packet discarding ratio in the data packet set of low importance. In this case, the data packet discarding policy determined by the terminal device is for the data packet set of low importance. That is, under this policy, the terminal device discards data packets only from the data packet set of low importance. For example, when the data packet discarding ratio information received by the terminal device is at a DRB level, the terminal device determines to discard the data packets corresponding to the data packet discarding ratio in each data packet set of low importance in the DRB.

In another feasible implementation, the terminal device determines the data packet discarding policy as discarding the data packets corresponding to the data packet discarding ratio in the set of high-importance data packets. In this case, the data packet discarding policy determined by the terminal device is for the set of high-importance data packets. That is, under this policy, the terminal device discards data packets only from the set of high-importance data packets. For example, when the data packet discarding ratio information received by the terminal device is at the DRB level, the terminal device determines to discard the data packets corresponding to the data packet discarding ratio in each set of high-importance data packets in the DRB.

In yet another feasible implementation, the terminal device determines the data packet discarding policy as discarding the data packets corresponding to the data packet discarding ratio in the set of high-importance data packets and discarding all data packets in the set of low-importance data packets. In this case, the data packet discarding policy determined by the terminal device is for the set of high-importance data packets and the set of low-importance data packets. That is, under this policy, the terminal device not only discards data packets from the set of high-importance data packets but also discards all data packets in the set of low-importance data packets at the same time. For example, when the data packet discarding ratio information received by the terminal device is at the DRB level, the terminal device determines to discard the data packets corresponding to the data packet discarding ratio in each set of high-importance data packets in the DRB, and also determines to discard the data packets in all sets of low-importance data packets in the DRB.

In still another implementable manner, the terminal device determines the data packet discarding policy as discarding a data packet corresponding to the first packet discarding ratio in the high-importance data packet set and a data packet corresponding to the second packet discarding ratio in the low-importance data packet set. In this case, the data packet discarding policy determined by the terminal device is for a high-importance data packet set and a low-importance data packet set. That is, under this policy, the terminal device not only selects a data packet in a high-importance data packet set, but also selects a data packet in a low-importance data packet set. For example, when the data packet discarding ratio information received by the terminal device is the DRB level, the terminal device determines to discard a data packet corresponding to the first packet discarding ratio in each high-importance data packet set on the DRB. In addition, it is determined to discard a data packet corresponding to the second packet discarding ratio in each low-importance data packet set in the DRB.

It should be noted that, in the two scenarios in which the data packet discarding policy determined by the terminal device is for the high-importance data packet set and the low-importance data packet set, the network device may indicate one or more pieces of packet discarding ratio information. This is not limited in this application. For example, if the data packet discarding policy determined by the terminal device is discarding a data packet corresponding to the first packet discarding ratio information in the high-importance data packet set and discarding a data packet corresponding to the second packet discarding ratio information in the low-importance data packet set, one piece of packet discarding ratio information may be indicated by the network device. There can also be multiple. Specially, when there is one piece of packet discarding ratio information, that is, when the first packet discarding ratio and the second packet discarding ratio are the same, it is equivalent to a scenario in which all data packet sets are corresponding to a same packet discarding ratio. If the data packet discarding policy determined by the terminal device is discarding a data packet corresponding to the data packet discarding ratio and all data packets in the low-importance data packet set in the high-importance data packet set, the network device may indicate one or more pieces of packet discarding ratio information. Specially, when there are multiple pieces of packet discarding ratio information, it may be considered that the first packet discarding ratio corresponding to the high-importance data packet set is one of the multiple pieces of packet discarding ratio information, and the second packet discarding ratio corresponding to the low-importance data packet set is 100%.

In yet another feasible implementation, the terminal device determines that the data packet discarding policy is to discard all data packets in the low-importance data packet set. In this case, the data packet discarding policy determined by the terminal device is for the low-importance data packet set. That is, under this policy, the terminal device discards all data packets in the low-importance data packet set. It may be understood that this scenario may be considered as a packet discarding ratio corresponding to the low-importance data packet set being 100%. In other words, in this scenario, even if the data packet discarding ratio indicated by the data packet discarding ratio information received by the terminal device is not 100%, the terminal device discards all data packets in each low-importance data packet set because the terminal device determines to discard all data packets in each low-importance data packet set, and therefore, the terminal device does not perform packet discarding based on the data packet discarding ratio indicated by the network device.

Optionally, the terminal device autonomously determines the data packet discarding policy, or the network device sends the data packet discarding policy to the terminal device, for example, sends the data packet discarding policy information while sending the data packet discarding ratio information, or the network device indicates the data packet discarding policy to the terminal device in the first indication information in the following description, so that the terminal device may determine the data packet discarding policy based on the first indication information. This is not limited in this application.

S705: The terminal device discards the data packets in the data packet set based on the data packet discarding ratio and the data packet discarding policy.

Specifically, after obtaining the data packet discarding ratio and determining the data packet discarding policy, the terminal device discards the data packets in the data packet set based on the data packet discarding ratio and the data packet discarding policy.

As can be learned from the foregoing S703, the data packet discarding ratio indicated by the network device for the terminal device may be one or more. As can be learned from the foregoing S704, the data packet discarding ratio required by the data packet discarding policy determined by the terminal device may also be one or more. It may be understood that, under different packet discarding policies, even if the data packet discarding ratios indicated by the network device for the terminal device are the same, the data packets discarded by the terminal device may still be different. For example, the data packet discarding ratios indicated by the network device for the terminal device are as follows: the high-importance data packet set corresponds to 10%, and the low-importance data packet set corresponds to 30% (for example, the first indication information in the following indicates different data packet sets corresponding to different ratios). In this case, if the data packet discarding policy is to discard data packets in the low-importance data packet set that correspond to the data packet discarding ratio, the terminal device discards 30% of the data packets in each low-importance data packet set, and does not discard the data packets in the high-importance data packet set. If the data packet discarding policy is to discard all data packets in the low-importance data packet set and data packets in the high-importance data packet set that correspond to the data packet discarding ratio, the terminal device discards all low-importance data packet sets, and discards 10% of the data packets in each high-importance data packet set.

It should be noted that the terminal device may perform packet discarding only on the data packet set currently buffered in a proportion, and does not perform packet discarding on subsequently newly arrived data packet sets; or the terminal device may not perform packet discarding on the data packet set currently buffered, but perform packet discarding on subsequently newly arrived data packet sets in a proportion; or the terminal device may perform packet discarding on both the data packet set currently buffered and subsequently newly arrived data packet sets in a proportion. This is not limited in this application.

In an implementable manner, the terminal device may directly clear the data packet from the buffer. For example, when the terminal device determines to discard the data packet #1 (a data packet to be discarded according to the data packet discarding policy), the terminal device selects at least one of the following implementations: discarding, at the SDAP layer, an SDAP service data unit (service data unit, SDU) and an SDAP PDU corresponding to the data packet #1; discarding, at the PDCP layer, a PDCP SDU and a PDCP PDU corresponding to the data packet #1; or instructing an RLC layer to discard one or more of an RLC SDU, an RLC SDU segment, and an RLC PDU corresponding to the data packet #1. It may be understood that the data packet #1 may be a data packet that arrives at the buffer before packet discarding starts, or may be a data packet that newly arrives at the buffer after packet discarding starts.

In another feasible implementation, the terminal device may use a packet discard timer to clear the data packet from the buffer. For example, when the terminal device determines to discard the data packet #1, the terminal device may adjust the PDCP discard timer corresponding to the data packet #1 to a shorter value (for example, adjusting it to 0 for immediate discarding). After the packet discard timer expires, the terminal device discards the PDCP SDU and the PDCP PDU corresponding to the data packet #1 at the PDCP layer; or if the PDCP PDU corresponding to the data packet #1 has already been delivered to a lower layer (for example, an RLC layer), the terminal device instructs the RLC layer to discard one or more of the RLC SDU, the RLC SDU segment, and the RLC PDU corresponding to the data packet #1. For example, when the terminal device determines to discard the data packet #1, the terminal device may also start a new discard timer for the data packet #1. This discard timer may also be at the PDCP layer. After the newly configured timer expires, the terminal device discards the PDCP SDU and the PDCP PDU corresponding to the data packet #1 at the PDCP layer; or if the PDCP PDU corresponding to the data packet #1 has already been delivered to a lower layer (for example, an RLC layer), the terminal device instructs the RLC layer to discard one or more of the RLC SDU, the RLC SDU segment, and the RLC PDU corresponding to the data packet #1. Optionally, the duration of the new discard timer may be provided by the network device to the terminal device. It may be understood that the data packet #1 may be a data packet that arrives at the buffer before packet discarding starts, or may be a data packet that newly arrives at the buffer after packet discarding starts.

It should also be noted that this application does not limit the data packets that the terminal device discards according to the data packet discarding ratio. For example, when the data packet discarding ratio is 30%, the 30% of data packets discarded by the terminal device may be the last 30% of data packets in the data packet set; or when the terminal device determines that 70% of data packets in the data packet set have been successfully sent, the terminal device discards the remaining 30% of data packets.

It can be understood that, for a data packet set, the number of data packets discarded by the terminal device is the product of the total number of data packets in the data packet set and the data packet discarding ratio. Optionally, when the product of the total number of data packets in the data packet set and the data packet discarding ratio is a non-integer value, the terminal device may determine the number of data packets to be discarded in the data packet set by rounding down the value. For example, if there are 50 data packets in the data packet set and the data packet discarding ratio is 25%, then 12 data packets may be discarded.

It should be noted that, in the process from S701 to S705, after the terminal device obtains the data packet discarding ratio and determines the data packet discarding policy, the terminal device will begin to discard data packets. In other words, when the terminal device discards data packets in the data packet set according to the data packet discarding ratio and the data packet discarding policy, it may be considered that the data packet discarding ratio information received by the terminal device not only indicates the data packet discarding ratio, but also configures the terminal device to discard data packets according to the data packet discarding ratio, and simultaneously instructs the terminal device to start discarding data packets.

It may be understood that, in some scenarios, the data packet discarding ratio information received by the terminal device may be sent by the network device to the terminal device when network congestion occurs. In this case, the terminal device may perform packet discarding according to the data packet discarding ratio information. In some other scenarios, the data packet discarding ratio information is preconfigured by the network device for the terminal device. In this case, after receiving the data packet discarding ratio information, the terminal device does not immediately perform packet discarding, and the terminal device performs packet discarding according to the ratio only when network congestion occurs. Therefore, to ensure stability of system performance, the first indication information may be used to indicate the terminal device to start packet discarding. In this case, the data packet processing method 700 provided in this application may further include the following steps.

S706: The network device sends first indication information to the terminal device, instructing the terminal device to start packet discarding.

Optionally, the network device may send the first indication information to the terminal device in a form such as by using RRC signaling, or by using a PDCP control PDU or a MAC CE.

In a feasible implementation, when the first indication information indicates only that the terminal device starts data packet discarding, the terminal device performs S705 after receiving the first indication information.

In another implementable manner, the first indication information may further indicate the data packet discarding policy of the terminal device. In this case, the first indication information includes an indication field indicating the data packet discarding policy. After the terminal device receives the first indication information, S704 and S705 are performed according to the data packet discarding policy indicated by the data packet discarding policy indication field. Specifically, the data packet discarding policy indication field may include one or more bits. For example, an indication field that is in the first indication information and that indicates the data packet discarding policy is one bit, where 0 indicates discarding all data packets in the low-importance data packet set, and 1 indicates discarding all data packets in the low-importance data packet set and a data packet corresponding to a packet discarding ratio in the high-importance data packet set. For example, an indication field that is in the first indication information and that indicates the data packet discarding policy is 2 bits, where 00 indicates to discard a data packet corresponding to a packet discarding ratio in the low-importance data packet set. 01 instructing to discard a data packet corresponding to a packet discarding ratio in all data packet sets. 10 instructing to discard all packets of the low importance packet set; 11 indicates to discard all packets of the low importance packet set and packets of the high importance packet set with a corresponding packet discarding ratio. For example, an indication field that is in the first indication information and that indicates the data packet discarding policy is three bits, any two adjacent bits in the three bits indicate the data packet discarding policy of the low-importance data packet set, and the other bit indicates the data packet discarding policy of the high-importance data packet set. Two adjacent bits 00 indicate that the low importance data packet set is not discarded. 01 indicates discarding a data packet corresponding to the data packet discarding ratio in the low-importance data packet set, and 10 indicates discarding all data packets in the low-importance data packet set. A remaining bit 0 indicates not to discard the high-importance data packet set, and 1 indicates to discard a data packet corresponding to a packet discarding ratio in the high-importance data packet set. For example, the indication field that is in the first indication information and that indicates the data packet discarding policy is eight bits, where four consecutive bits of the most significant bits are used to indicate the data packet discarding ratio of the high-importance data packet set, and the remaining four consecutive bits are used to indicate the data packet discarding ratio of the low-importance data packet set. In this case, the indication field indicating the data packet discarding policy indicates, by carrying two packet discarding ratios, that both the high-importance data packet set and the low-importance data packet set are discarded. Values of four consecutive bits of the most significant bits in the packet discarding indication field may indicate a packet discarding ratio of 0% to 100%. For example, 0000 indicates to discard 0% data packets in the high-importance data packet set, 0011 indicates to discard 30% data packets in the high-importance data packet set, and the like. Similarly, a value of the remaining four bits in the packet discarding indication field may indicate a packet discarding ratio of 0% to 100%. For example, 1010 indicates that 100% data packets in the low importance data packet set are discarded. For example, when the importance of the data packet set is represented by using PSI values 0 to 15, the indication field that indicates the data packet discarding policy in the first indication information may be further 16 bits. Each of the 16 bits indicates whether a packet is discarded according to the data packet discarding ratio in a data packet set corresponding to importance values 0 to 15. For example, the 0000000010101111 indicates that a packet is discarded in a set of data packets whose PSI values are 0 to 3, a PSI value is 5, and a PSI value is 7. For example, when the importance of the data packet set is represented by using PSI values 0 to 15, and eight PSI values are one PSI level, the indication field that indicates the data packet discarding policy in the first indication information may further be 2 bits. One bit is used to indicate whether a packet is discarded in a data packet set with a PSI value of 0 to 7 according to a packet discarding ratio, and the other bit is used to indicate whether a packet is discarded in a data packet set with a PSI value of 8 to 15 according to a packet discarding ratio. For example, 01 indicates that a packet set with a PSI value of 0 to 7 is discarded according to the data packet discarding ratio, and a packet set with a PSI value of 8 to 15 is not discarded.

It should be noted that there may be one or more pieces of first indication information indicating a packet discarding policy for the terminal device, that is, the network device may send the first indication information only once or send different first indication information at different moments. Specifically, when the network device sends the first indication information only once, the terminal device discards the data packet according to the data packet discarding policy indicated by the first indication information. When the network device sends the first indication information for multiple times, the first indication information at different moments may indicate different packet discarding policies. For example, when the network congestion degree is relatively light, the first indication information may indicate the terminal device to discard only some data packets in the data packet set of low importance; when the network congestion degree is severe, the first indication information may indicate the terminal device to discard all data packets in the data packet set of low importance and some data packets in the data packet set of high importance. It may be understood that when the first indication information indicates different packet discarding policies for the terminal device, flexibility of packet discarding by the terminal device can be improved, so that the system can be applied to different application scenarios.

Optionally, the first indication information may further carry identification information corresponding to the data packet set, for example, at least one of a PDU session ID, a DRB ID, and a QoS flow ID, to identify a PDU session, a DRB, or a QoS flow for which the first indication information is intended.

It may be understood that the first indication information and the data packet discarding ratio information may be carried in a same message sent by the network device to the terminal device. Alternatively, the network device may separately carry the data packet discarding ratio information and the first indication information in different messages. For example, the network device first configures the data packet discarding ratio information for the terminal device by using an RRC message, and after receiving the data packet discarding ratio information, the terminal device does not perform packet discarding first. When detecting that a congestion occurs, the network device then sends a PDCP control PDU or a MAC CE to indicate the terminal device to perform packet discarding according to the ratio. In other words, the sequence of S703 and S706 is not limited in this application.

It should be noted that the first indication information may also be referred to as packet discarding activation information based on a ratio, packet discarding activation information, or the like, which is not limited in this application.

Optionally, before the network device sends the one or more pieces of first indication information to the terminal device, the terminal device may further send second indication information to the network device, where the second indication information is used to notify the network device to provide the first assistance information. After receiving the second indication information, the network device monitors network congestion. When congestion occurs, the network device sends the first indication information or the first indication information and the first assistance information to the terminal device. When the network device further sends the first assistance information, the terminal device may determine, based on the first assistance information, whether to discard the data packet according to the data packet discarding ratio. This process includes the following steps:
S707: The terminal device sends second indication information to the network device, where the second indication information instructs the network device to provide the first assistance information, and the first assistance information is used by the terminal device to determine whether to discard the data packet according to the data packet discarding ratio.

Specifically, the terminal device sends the second indication information to the network device, and correspondingly, the network device receives the second indication information.

S708: The network device sends first assistance information to the terminal device, where the first assistance information is used to indicate whether the terminal device discards the data packet according to the data packet discarding ratio.

Optionally, the first assistance information includes one or more of congestion degree information, air interface quality information, packet discarding activation suggestion information, and packet discarding policy suggestion information. The congestion degree information indicates a degree of link congestion between the network device and the terminal device, the air interface quality information indicates air interface quality between the network device and the terminal device, the packet discarding activation suggestion information indicates whether the network device suggests the terminal device to discard the data packet according to the data packet discarding ratio, and the data packet discarding policy suggestion information indicates that the terminal device discards the data packet according to the data packet discarding policy suggested by the network device. Specifically, the terminal device may determine, based on one or more of the congestion degree information, the air interface quality information, the packet discarding activation suggestion information, and the data packet discarding policy suggestion information, whether to discard the data packet according to the data packet discarding ratio. Specifically, when the first assistance information indicates at least one of the following items, the terminal device determines to discard the data packet according to the data packet discarding ratio: the degree of link congestion between the network device and the terminal device is relatively high, the air interface quality between the network device and the terminal device is relatively poor, the network device suggests the terminal device to discard the data packet according to the data packet discarding ratio, and the data packet discarding policy suggested by the network device.

It should be noted that when the network device sends the first assistance information and the first indication information to the terminal device, an order of S707 and S708 is not limited in this application. For example, when the first assistance information carries a packet discarding policy (other information in the first assistance information may or may not carry the data packet discarding policy), the network device may first indicate to start packet discarding, and then send the recommended packet discarding policy to the terminal device by using the first assistance information; or the network device may first send the first indication information indicating to start packet discarding, and then send the recommended packet discarding policy to the terminal device by using the first assistance information; or the network device may send both the recommended packet discarding policy and the first indication information to the terminal device at the same time, where the first assistance information and the first indication information may be carried in a same message or in two separate messages.

It may be understood that, in the foregoing S706 to S708, the network device sends the first assistance information and the first indication information to the terminal device. In some embodiments, the network device may send only the first assistance information or only the first indication information to the terminal device, which is not limited in this application. Specifically, when the network device sends only the first assistance information to the terminal device, the method 700 includes S707 and S708; or when the network device sends only the first indication information to the terminal device, the method 700 includes S706.

It may also be understood that the foregoing S706 to S708 are scenarios in which the terminal device determines to discard packets according to the data packet discarding ratio. The terminal device does not perform packet discarding when the first assistance information sent by the network device to the terminal device indicates at least one of the following: the degree of link congestion between the network device and the terminal device is relatively low, the air interface quality between the network device and the terminal device is relatively good, or the network device does not recommend the terminal device to discard data packets according to the data packet discarding ratio.

When the packet discarding indication also takes effect for subsequent arriving packet sets, optionally, the network device may further instruct the terminal device to stop packet discarding, for example, by instructing to stop packet discarding when detecting that the congestion has disappeared. In this case, the method 700 may further include S709.

S709: The network device sends third indication information to the terminal device, where the third indication information instructs the terminal device to stop packet discarding.

It should be noted that the third indication information may also be referred to as deactivation information based on proportional packet discarding, or the like, which is not limited in this application.

In some embodiments, when the network device is a base station and adopts a CU/DU separation architecture or a CU-CP/CU-UP separation architecture, FIG. 9 is a schematic flowchart of a second packet processing method 900 according to an embodiment of this application. As shown in FIG. 9, this schematic flowchart is illustrated by using an example of interaction between a CU-CP and a DU. Steps performed by the CU-CP and/or the DU may be performed by modules or units in the CU-CP and/or the DU, for example, performed by chips in the CU-CP and/or the DU. Specifically, the method includes the following multiple steps.

S901. The CU-CP obtains a redundancy degree of a data packet set.

Specifically, the CU-CP or the CU-UP may obtain the redundancy degree of the data packet set by receiving the redundancy degree information from the core network device. For example, the redundancy degree is obtained by receiving the redundancy degree information carried in a PDU SESSION SETUP/MODIFICATION REQUEST message from the SMF. For the redundancy degree information, refer to the related descriptions in S701. In addition, for the related descriptions of the data packet set, refer to S701, and details are not described herein again.

It should be noted that FIG. 9 is merely an embodiment of a network device provided in this application under a split architecture, and does not constitute a limitation on the protection scope of this application. In some other embodiments, the redundancy degree information of the data packet set may alternatively be obtained by the CU-UP from the core network, and the redundancy degree is obtained based on the redundancy degree information; or the redundancy degree information of the data packet set may alternatively be obtained by the DU from the CU-CP or the CU-UP, and the redundancy degree is obtained based on the redundancy degree information.

S902: The CU-CP determines the data packet discarding ratio based on the redundancy degree.

For details, refer to the related descriptions in S702, and details are not described herein again.

It should be noted that, in some other embodiments, after the CU-UP or the DU obtains the redundancy degree information, the CU-UP or the DU may determine the data packet discarding ratio based on the redundancy degree.

S903: The CU-CP sends the data packet discarding ratio information to the terminal device, where the data packet discarding ratio information indicates the data packet discarding ratio.

Optionally, the CU-CP sends the data packet discarding ratio information to the terminal device by using RRC signaling. For related descriptions of the data packet discarding ratio information, refer to the foregoing S703, and details are not described herein again. It may be understood that the data packet discarding ratio information may be used at the same time to configure the terminal device to perform packet discarding based on the data packet discarding ratio.

It should be noted that in some other embodiments, the CU-UP or the DU may alternatively send the data packet discarding ratio information to the terminal device. For example, when the CU-UP sends the data packet discarding ratio information to the terminal device, the data packet discarding ratio information may be carried in a PDU controlled by the PDCP. When the DU sends the data packet discarding ratio information to the terminal device, the data packet discarding ratio information may be carried in a MAC CE.

S904. The terminal device determines a packet discarding policy.

For details, refer to the related descriptions in S704. Details are not described herein again.

S905. The terminal device discards the data packet in the data packet set according to the data packet discarding ratio and the data packet discarding policy.

For details, refer to the related descriptions in S705. Details are not described herein again.

Optionally, the method 900 may further include the following steps:
S906: The CU-CP sends first indication information to the terminal device, instructing the terminal device to start packet discarding.

Optionally, the CU-CP sends the first indication information to the terminal device by using RRC signaling. The first indication information may indicate only to start packet discarding for the terminal device, or may further indicate a packet discarding policy of the terminal device. In addition, there may be one or more pieces of first indication information, and the first indication information may further carry identification information corresponding to a data packet set, or the like. Specifically, for details of this step, refer to the foregoing S706. Details are not described herein again.

Optionally, before sending the one or more pieces of first indication information to the terminal device, the CU-CP may further send fourth indication information to the DU, where the fourth indication information is used to notify the DU that the terminal device has been configured to perform packet discarding rationally and/or is used to notify the DU to provide the second assistance information. After receiving the fourth indication information, the DU monitors network congestion. When the congestion occurs, the DU sends the second assistance information to the CU-CP, so that the CU-CP learns of the network congestion, and then sends the first indication information to the terminal device. This process includes the following steps:
S907: The CU-CP sends fourth indication information to the DU, where the fourth indication information indicates the DU to report the second assistance information and/or indicates that the CU-CP has configured the terminal device to discard data packets according to a ratio, where the second assistance information is used by the CU-CP to determine whether to send the first indication information.

Specifically, the CU-CP sends the fourth indication information to the DU, and correspondingly, the DU receives the fourth indication information.

S908: The DU sends the second assistance information to the CU-CP.

Specifically, after receiving the fourth indication information, the DU sends the second assistance information to the CU-CP. Optionally, the second assistance information includes one or more of congestion degree information, air interface quality information, packet discarding activation suggestion information, and packet discarding policy suggestion information. The congestion degree information indicates a degree of link congestion between the CU-CP and the terminal device. The air interface quality information indicates air interface quality between the CU-CP and the terminal device. The packet discarding activation suggestion information indicates whether the DU suggests the terminal device to discard the data packets according to the data packet discarding ratio. The data packet discarding policy suggestion information indicates the terminal device to discard the data packets according to the data packet discarding policy suggested by the DU.

S909: The CU-CP determines to send the first indication information.

Specifically, the CU-CP determines to send the first indication information based on one or more of the congestion degree information, the air interface quality information, the packet discarding activation advice information, and the data packet discarding policy advice information. Specifically, when the second assistance information indicates at least one of the following items, the CU-CP determines to send the first indication information: the link between the CU-CP and the terminal device is in a relatively high degree of congestion, the air interface quality between the CU-CP and the terminal device is relatively poor, the DU advises the terminal device to discard the data packet according to the data packet discarding ratio, and the DU advises the data packet discarding policy.

It may be understood that when the second assistance information includes the data packet discarding policy advice information (the second assistance information may include other information or may not include other information), the CU-CP may add the advised packet discarding policy to the first indication information, so that after receiving the first indication information, the terminal device may perform packet discarding according to the advised packet discarding policy.

It may be further understood that S906 to S909 are scenarios in which the CU-CP determines to send the first indication information, or S906 to S909 are scenarios in which the terminal device discards a packet according to a proportion. When the second assistance information reported by the DU to the CU-CP indicates at least one of the following, the CU-CP does not send the first indication information: A link between the CU-CP and the terminal device has a relatively low congestion degree, an air interface between the CU-CP and the terminal device has relatively good quality, and the DU suggests that the terminal device not discard the data packet according to the data packet discarding ratio. In this case, the terminal device may not perform proportional packet discarding.

It should be noted that, in some other embodiments, the CU-UP or the DU may further send the first indication information to the terminal device. For example, when the CU-UP sends the first indication information to the terminal device, the first indication information may be carried in a PDCP-controlled PDU. When the DU sends the first indication information to the terminal device, the first indication information may be carried in the MAC CE. Optionally, when the data packet discarding ratio information is sent by the CU-CP or the CU-UP, the first indication information is sent by the DU. When the first indication information is sent by the DU, the CU-CP or the CU-UP may further send fifth indication information to the DU, where the fifth indication information instructs the DU to send the first assistance information to the terminal device, and/or indicates that the CU-CP configures the terminal device to discard a data packet based on a proportion. The first assistance information is used by the terminal device to determine whether to discard the data packet based on the data packet discarding ratio. The DU learns, by using the fifth indication information, that the terminal device has obtained the data packet discarding ratio, and may perform packet discarding. Therefore, when detecting network congestion, the DU sends the first indication information to the terminal device, to instruct the terminal device to start packet discarding. In addition, in some other embodiments, after the CU-CP or the CU-UP sends the fifth indication information to the DU, the DU may further send the first indication information and the first assistance information to the terminal device, or send only the first assistance information.

When the packet discarding indication also takes effect for subsequent arriving packet sets, the CU-CP may optionally further instruct the terminal device to stop packet discarding, for example, by instructing to stop packet discarding when detecting that the congestion has disappeared. In this case, the method 900 may further include S910.

S910: The CU-CP sends third indication information to the terminal device, where the third indication information instructs the terminal device to stop packet discarding.

It should be noted that the third indication information may also be referred to as deactivation information based on proportional packet discarding, or the like, which is not limited in this application.

It should also be noted that in some other embodiments, the third indication information may alternatively be sent by the CU-UP or the DU to the terminal device, which is not limited in this application.

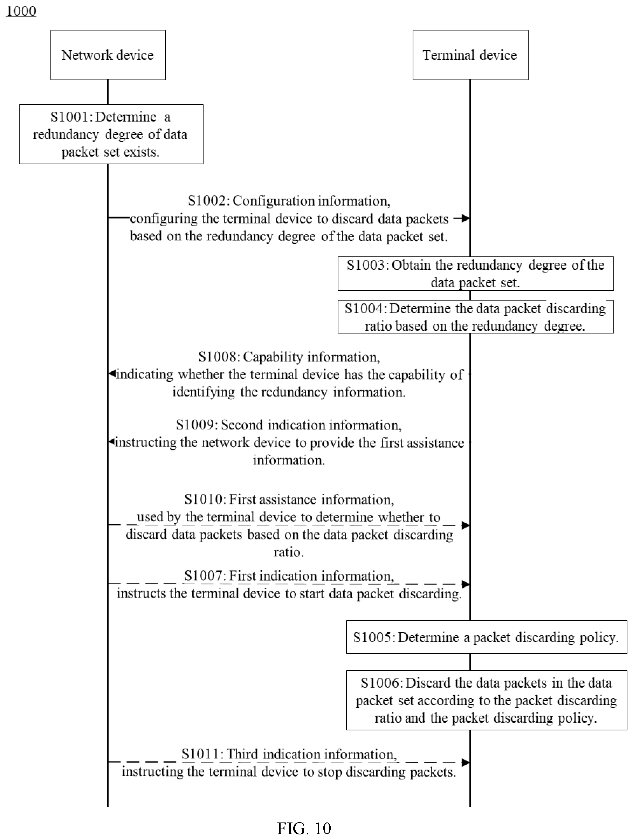

FIG. 10 is a schematic flowchart of a third packet processing method 1000 according to an embodiment of this application. As shown in FIG. 10, the schematic flowchart is illustrated by using an example of interaction between a network device and a terminal device in a 5G base station. Steps performed by the network device and/or the terminal device may be performed by modules or units in the network device and/or the terminal device, for example, performed by a chip in the network device and/or the terminal device. Specifically, the method includes the following multiple steps.

S1001: The network device determines that a redundancy degree exists in a data packet set.

Optionally, the network device may obtain application information about network coding from a core network. Specifically, the network device receives notification information from a core network device, where the notification information indicates whether network coding (for example, FEC coding) is used for the data packet set and/or indicates whether a redundancy degree exists in the data packet set. For example, the network device receives a PDU SESSION SETUP/MODIFICATION REQUEST message from an SMF, where the message includes a 1-bit indication field, used to carry the notification information indicating whether network coding is used for the data packet set or whether a redundancy degree exists. Here, "0" indicates that network coding is not used or no redundancy degree exists, and "1" indicates that network coding is used or a redundancy degree exists. Alternatively, the message includes a 2-bit indication field, used to carry the notification information indicating whether network coding is used for the data packet set and whether a redundancy degree exists, where "00" indicates that network coding is not used and no redundancy degree exists, "01" indicates that network coding is not used but a redundancy degree exists. "10" indicates that network coding is used but no redundancy degree exists, and "11" indicates that network coding is used and a redundancy degree exists. Optionally, the notification information is at a UE level, a PDU session level, a QoS flow level, or a DRB level.

Similarly, the data packets included in the data packet set may be some or all data packets in one or more PDU sets generated by the PDU set grouping, which is not limited in this application. It may be understood that for other related descriptions of the data packet set, for example, importance of the data packet set, importance determining, and an entity determining importance of the data packet set, refer to S701 in FIG. 7. Details are not described herein again.

S1002: The network device sends configuration information to the terminal device, to configure the terminal device to discard the data packet based on the redundancy degree of the data packet set.

Specifically, after receiving the configuration information, the terminal device may learn, based on the configuration information, that the data packet needs to be discarded based on the redundancy degree of the data packet set.

Optionally, the configuration information may further carry identification information corresponding to the data packet set, for example, at least one of a PDU session ID, a DRB ID, and a QoS flow ID, to identify a PDU session, a DRB, or a QoS flow for which the configuration information is intended.

S1003. The terminal device obtains a redundancy degree of a data packet set.

In an implementable manner, the terminal device receives the redundancy degree information from the application layer (for example, an application program on a mobile phone side) to obtain the redundancy degree of the data packet set. For example, the application layer may add the redundancy degree information of the network coding to the packet header of the uplink data packet. For example, a piece of redundancy information is carried by using several bits in a real-time transport protocol (real-time transport protocol, RTP) extension header of a data packet. The terminal device identifies the redundancy degree information in the data packet header, and further determines the redundancy corresponding to the data packet set corresponding to the data packet. Optionally, for a data packet set, the redundancy degree information may be carried in any data packet or all data packets in the data packet set. Optionally, if there is no redundant packet in a data packet set, the redundancy degree information may not be carried.

Specifically, the redundancy degree information indicates redundancy of the data packet set. In an implementable manner, the redundancy degree information may be one or more of the following: a quantity K of original data packets, a quantity N of encoded data packets, and a quantity M of data packets that need to be used for restoring complete data. In this case, The terminal device may determine the redundancy degree of the data packet set based on one or more of the received K, N, and M. In another implementation, the redundancy degree information may be directly the redundancy degree of the data packet set. In this case, the terminal device may directly determine the redundancy degree of the data packet set based on the received redundancy information. In still another implementable manner, the redundancy degree information may be a redundancy range of the data packet set. For example, the redundancy degree information is that the redundancy ranges from 10 to 30%. In this case, the terminal device may randomly determine a redundancy in the redundancy range. In still another implementable manner, the redundancy degree information may indicate that the data packet set uses network coding. For example, the redundancy degree information indicates that the data packet set uses the FEC technology. In this case, the terminal device may determine an empirical redundancy based on past experience. In addition, the redundancy degree information may be a specific value, for example, 0, used to indicate that the corresponding data packet set has no redundancy.

In another feasible implementation, the terminal device autonomously determines the redundancy degree of each data packet set in the data packet set. For example, the terminal device identifies the data volume of each data packet set, where a data packet set with a larger data volume is considered to contain more redundant data packets, that is, there is a larger redundancy degree.

S1004: The terminal device determines a packet discarding ratio based on the redundancy degree.

Specifically, the data packet discarding ratio is a proportion of data packets discarded by the terminal device in the data packet set. Optionally, when determining the data packet discarding ratio based on the redundancy degree, the terminal device sets the data packet discarding ratio to be equal to or less than the redundancy degree.

It should be noted that, different from the method 700 shown in FIG. 7, in the embodiment shown in FIG. 10, the data packet discarding ratio determined by the terminal device based on the redundancy degree corresponds to a single data packet set. This is because different data packet sets may carry different redundancy degree information corresponding to the data packet sets themselves. Therefore, in FIG. 10, the terminal device determines the data packet discarding ratio of each data packet set based on the redundancy degree of each data packet set.

S1005: The terminal device determines a packet discarding policy.

Specifically, after receiving the configuration information, the terminal device learns that packet discarding needs to be performed based on the redundancy degree of the data packet set, so that the terminal device determines the data packet discarding policy.

In an implementable manner, the terminal device determines the data packet discarding policy as discarding, from each data packet set, a data packet corresponding to the data packet discarding ratio. It may be understood that, in this case, the data packet discarding policy determined by the terminal device is for all data packet sets, that is, under this policy, the terminal device does not consider importance of the data packet sets, and the terminal device discards, based on the data packet discarding ratio determined for each data packet set, a data packet in the corresponding data packet set. For example, for a DRB level, for example, a DRB #1, which includes a data packet set #1, a data packet set #2, and a data packet set #3, if the data packet discarding ratio determined by the terminal device for the data packet set #1 is 20%, the data packet discarding ratio determined by the terminal device for the data packet set #2 is 0%, and the data packet discarding ratio determined by the terminal device for the data packet set #3 is 100%, then the terminal device discards 20% of data packets in the data packet set #1, does not discard data packets in the data packet set #2, and discards all data packets in the data packet set #3.

In another feasible implementation, the terminal device determines the data packet discarding policy as discarding the data packets corresponding to the data packet discarding ratio in the low-importance data packet set. In this case, the data packet discarding policy determined by the terminal device is for the low-importance data packet set. That is, under this policy, the terminal device discards data packets only from the low-importance data packet set. For example, at the DRB level, for example, DRB #1, which includes a data packet set #1, a data packet set #2, and a data packet set #3, where the data packet set #1 and the data packet set #2 are low-importance data packets, and the data packet set #3 is a high-importance data packet. In addition, the data packet discarding ratio determined by the terminal device based on the data packet set #1 is 20%, the data packet discarding ratio determined based on the data packet set #2 is 30%, and the data packet discarding ratio determined based on the data packet set #3 is 10%. In this case, the terminal device discards data packets in all low-importance data packet sets, that is, the terminal device discards 20% of data packets in the data packet set #1, discards 30% of data packets in the data packet set #2, and does not discard data packets in the data packet set #3.

In another feasible implementation, the terminal device determines the data packet discarding policy as discarding the data packets corresponding to the data packet discarding ratio in the set of high-important data packets. In this case, the data packet discarding policy determined by the terminal device is for the set of high-important data packets. That is, under this policy, the terminal device discards data packets only from the set of high-important data packets. For example, at the DRB level, for example, DRB#1, which includes a data packet set #1, a data packet set #2, and a data packet set #3, where the data packet set #1 and the data packet set #2 are low-important data packets, and the data packet set #3 is a high-important data packet. In addition, the data packet discarding ratio determined by the terminal device based on the data packet set #1 is 20%, the data packet discarding ratio determined based on the data packet set #2 is 30%, and the data packet discarding ratio determined based on the data packet set #3 is 10%. In this case, the terminal device discards data packets from all sets of high-important data packets, that is, the terminal device does not discard data packets in the data packet set #1 and the data packet set #2, but discards only 10% of the data packets in the data packet set #3.

In yet another feasible implementation, the terminal device determines the data packet discarding policy as discarding the data packets corresponding to the data packet discarding ratio in the set of high-importance data packets and all data packets in the set of low-importance data packets. In this case, the data packet discarding policy determined by the terminal device is for the set of high-importance data packets and the set of low-importance data packets. That is, under this policy, the terminal device not only selects data packets to be discarded from the set of high-importance data packets, but also discards all data packets in the set of low-importance data packets at the same time. For example, for a DRB-level, for example, DRB#1, which includes the data packet set #1, the data packet set #2, and the data packet set #3, where the data packet set #1 and the data packet set #2 are low-importance data packets, and the data packet set #3 is a high-importance data packet. In addition, the data packet discarding ratio determined by the terminal device based on the data packet set #1 is 20%, the data packet discarding ratio determined based on the data packet set #2 is 30%, and the data packet discarding ratio determined based on the data packet set #3 is 10%. In this case, the terminal device discards all data packets in the data packet set #1 and the data packet set #2, and discards 10% of the data packets in the data packet set #3.

In yet another feasible implementation, the terminal device determines that the data packet discarding policy is to discard all data packets in the low-importance data packet set. In this case, the data packet discarding policy determined by the terminal device is for the low-importance data packet set. That is, under this policy, the terminal device discards all data packets in the low-importance data packet set. It may be understood that this scenario may be considered as a packet discarding ratio corresponding to the low-importance data packet set being 100%. In other words, in this scenario, even if the data packet discarding ratio indicated by the data packet discarding ratio information determined by the terminal device is not 100%, the terminal device does not perform packet discarding based on the determined packet discarding ratio because the terminal device determines to discard all data packets in each low-importance data packet set. For example, for a DRB level, for example, DRB#1, which includes the data packet set #1, the data packet set #2, and the data packet set #3, where the data packet set #1 and the data packet set #2 are low-importance data packets, and the data packet set #3 is a high-importance data packet, and the terminal device determines a packet discarding ratio of 20% for the data packet set #1, a packet discarding ratio of 30% for the data packet set #2, and a packet discarding ratio of 10% for the data packet set #3. In this case, the terminal device discards all data packets in the low-importance data packet sets at a rate of 100%, that is, the terminal device discards all data packets in the data packet set #1 and the data packet set #2, and does not discard data packets in the data packet set #3.

Optionally, the terminal device autonomously determines the data packet discarding policy, or the terminal device determines the data packet discarding policy based on the first indication information in the following description. This is not limited in this application.

S1006: The terminal device discards the data packets in the data packet set based on the data packet discarding ratio and the data packet discarding policy.

Specifically, after obtaining the data packet discarding ratio and determining the data packet discarding policy, the terminal device discards the data packets in the data packet set based on the data packet discarding ratio and the data packet discarding policy.

It can be learned from the foregoing S1005 that, under different packet discarding policies, for a plurality of same data packet sets at a same level (for example, a UE level, a PDU session level, a DRB level, or a QoS flow level), a packet discarding behavior of the terminal device may be different.

It should be noted that the terminal device may perform packet discarding on the data packet set currently buffered only by discarding data packets according to the ratio, and does not perform packet discarding on a subsequently newly arrived data packet set; or the terminal device may not perform packet discarding on the data packet set currently buffered, but perform packet discarding on a subsequently newly arrived data packet set according to the ratio; or the terminal device may perform packet discarding on both the data packet set currently buffered and the subsequently newly arrived data packet set according to the ratio. This is not limited in this application.

In an implementable manner, the terminal device may directly clear the data packet from the cache. For example, when the terminal device determines to discard the data packet # 1 (a data packet to be discarded determined for the data packet discarding policy), the terminal device selects at least one of the following implementations: discarding, at the SDAP layer, an SDAP service data unit (service data unit, SDU) corresponding to the data packet # 1 and SDAP PDU; discarding, at the PDCP layer, a PDCP SDU and a PDCP PDU that are corresponding to the data packet # 1; and; instructing the RLC layer to discard one or more of the RLC SDU, the RLC SDU segment, and the RLC PDU corresponding to the data packet # 1. It may be understood that the data packet # 1 may be a data packet that arrives in the cache before packet discarding starts, or may be a data packet that arrives in the cache after packet discarding starts.

In another possible implementation, the terminal device may clear the data packet from the buffer by using the packet discard timer. For example, when the terminal device determines to discard the data packet # 1, the terminal device may adjust the PDCP discard timer corresponding to the data packet # 1 to a relatively short value (for example, if the PDCP discard timer is adjusted to 0 and immediately discards the data packet), and after the packet discard timer expires, discarding, by the terminal device at the PDCP layer, the PDCP SDU and the PDCP PDU that are corresponding to the data packet # 1; and; If the PDCP PDU corresponding to the data packet # 1 has been delivered to the lower layer (for example, the RLC layer), instruct the RLC layer to discard one or more of the RLC SDU, the RLC SDU segment, and the RLC PDU corresponding to the data packet # 1. For example, when the terminal device determines to discard the data packet # 1, the terminal device may further start a new discard timer for the data packet # 1. Alternatively, the discard timer may be at the PDCP layer. After the newly configured timer expires, discarding, by the terminal device at the PDCP layer, the PDCP SDU and the PDCP PDU that are corresponding to the data packet # 1; and; If the PDCP PDU corresponding to the data packet # 1 has been delivered to a lower layer (such as the RLC layer), instruct the RLC layer to discard one or more of the RLC SDU, the RLC SDU segment, and the RLC PDU corresponding to the data packet # 1. Optionally, duration of the new discard timer may be provided by the network device for the terminal device. It may be understood that the data packet # 1 may be a data packet that arrives in the cache before packet discarding starts, or may be a data packet that arrives in the cache after packet discarding starts.

Similarly, there is no limitation on the data packets that the terminal device chooses to discard. For example, when the data packet discarding ratio is 30%, the 30% of data packets discarded by the terminal device may be the last 30% of data packets in the data packet set; or, when the terminal device determines that 70% of the data packets in the data packet set have been successfully sent, the terminal device discards the remaining 30% of data packets.

It can be understood that, for a data packet set, the number of data packets discarded by the terminal device is the product of the total number of data packets in the data packet set and the data packet discarding ratio. Optionally, when the product of the total number of data packets in the data packet set and the data packet discarding ratio is a non-integer value, the terminal device may determine the number of data packets to be discarded in the data packet set by rounding down the value. For example, if there are 50 data packets in the data packet set and the data packet discarding ratio is 25%, then 12 data packets may be discarded.

It should be noted that, in the procedures S1001 to S1006 described above, once the terminal device determines the data packet discarding ratio and the data packet discarding policy, the terminal device will begin to discard data packets. In other words, when the terminal device discards data packets in the data packet set based on the data packet discarding ratio and the data packet discarding policy, it can be considered that the configuration information received by the terminal device not only indicates the packet discarding based on the redundancy degree of the data packets but also simultaneously instructs the terminal device to start discarding data packets.

It may be understood that, in some scenarios, the configuration information received by the terminal device may be sent by the network device to the terminal device when network congestion occurs. In this case, the terminal device may perform packet discarding rationally. In some other scenarios, the configuration information is configured by the network device for the terminal device in advance. In this case, after receiving the configuration information, the terminal device does not immediately perform packet discarding, and the terminal device performs packet discarding rationally only when network congestion occurs. Therefore, to ensure stability of system performance, the terminal device may be instructed to start packet discarding by using the first indication information. In this case, the data packet processing method 1000 provided in this application may further include the following steps.

S1007: The network device sends first indication information to the terminal device, instructing the terminal device to start packet discarding.

Optionally, the network device may send the first indication information to the terminal device in a form such as by using RRC signaling, or by using a PDCP control PDU or a MAC CE.

In an implementable manner, when the first indication information only indicates the terminal device to start packet discarding, the terminal device performs S1006 after receiving the first indication information.

In another implementable manner, the first indication information may further indicate the data packet discarding policy of the terminal device. In this case, the first indication information includes an indication field indicating the data packet discarding policy. After the terminal device receives the first indication information, perform S1005 and S1006 according to the data packet discarding policy indicated in the data packet discarding policy indication field. Specifically, the data packet discarding policy indication field may include one or more bits. For example, an indication field that is in the first indication information and that indicates the data packet discarding policy is 1 bit, where 0 indicates discarding all data packets in the low-importance data packet set, and 1 indicates discarding all data packets in the low-importance data packet set and a data packet corresponding to a packet discarding ratio in the high-importance data packet set. For example, an indication field that is in the first indication information and that indicates the data packet discarding policy is 2 bits, where 00 indicates to discard a data packet corresponding to a packet discarding ratio in the low-importance data packet set. 01 instructing to discard a data packet corresponding to a packet discarding ratio in all data packet sets. 10 instructing to discard all packets of the low importance packet set; 11 indicates to discard all packets of the low importance packet set and packets of the high importance packet set with a corresponding packet discarding ratio. For example, an indication field that is in the first indication information and that indicates the data packet discarding policy is three bits, any two adjacent bits in the three bits indicate the data packet discarding policy of the low-importance data packet set, and the other bit indicates the data packet discarding policy of the high-importance data packet set. Two adjacent bits 00 indicate that the low importance data packet set is not discarded. 01 indicates discarding a data packet corresponding to the data packet discarding ratio in the low-importance data packet set, and 10 indicates discarding all data packets in the low-importance data packet set. A remaining bit 0 indicates not to discard the high-importance data packet set, and 1 indicates to discard a data packet corresponding to a packet discarding ratio in the high-importance data packet set. For example, when the importance of the data packet set is represented by using PSI values 0 to 15, the indication field that indicates the data packet discarding policy in the first indication information may further be 16 bits. Each of the 16 bits indicates whether a packet is discarded according to the data packet discarding ratio in a data packet set corresponding to importance values 0 to 15. For example, the 0000000010101111 indicates that a packet is discarded in a set of data packets whose PSI values are 0 to 3, a PSI value is 5, and a PSI value is 7. For example, when the importance of the data packet set is indicated by using PSI values 0 to 15, and eight PSI values are one PSI level, the indication field that indicates the data packet discarding policy in the first indication information may further be 2 bits. One bit is used to indicate whether a packet is discarded in a data packet set with a PSI value of 0 to 7 according to a packet discarding ratio, and the other bit is used to indicate whether a packet is discarded in a data packet set with a PSI value of 8 to 15 according to a packet discarding ratio. For example, 01 indicates that a packet set with a PSI value of 0 to 7 is discarded according to the data packet discarding ratio, and a packet set with a PSI value of 8 to 15 is not discarded.

It should be noted that there may be one or more pieces of first indication information indicating a packet discarding policy for the terminal device, that is, the network device may send the first indication information only once or send different first indication information at different moments. Specifically, when the network device sends the first indication information only once, the terminal device discards the data packet according to the data packet discarding policy indicated by the first indication information. When the network device sends the first indication information for multiple times, the first indication information at different moments may indicate different packet discarding policies. For example, when the network congestion degree is relatively light, the first indication information may indicate the terminal device to discard only some data packets in the data packet set of low importance; when the network congestion degree is severe, the first indication information may indicate the terminal device to discard all data packets in the data packet set of low importance and some data packets in the data packet set of high importance. It may be understood that when the first indication information indicates different packet discarding policies for the terminal device, flexibility of packet discarding by the terminal device can be improved, so that the system can be applied to different application scenarios.

Optionally, the first indication information may further carry identification information corresponding to the data packet set, for example, at least one of a PDU session ID, a DRB ID, and a QoS flow ID, to identify a PDU session, a DRB, or a QoS flow for which the first indication information is intended.

It may be understood that the first indication information and the configuration information may be carried in a same message sent by the network device to the terminal device. Alternatively, the network device may separately carry the configuration information and the first indication information in different messages. For example, the network device first sends the configuration information to the terminal device by using an RRC message, and after receiving the configuration information, the terminal device does not perform packet discarding first. When detecting that a congestion occurs, the network device then sends a PDCP control PDU or a MAC CE to instruct the terminal device to perform packet discarding based on the data packet discarding ratio. In other words, the sequence of S1002 and S1007 is not limited in this application.

It should be noted that the first indication information may also be referred to as packet discarding activation information based on a ratio, packet discarding activation information, or the like, which is not limited in this application.

Optionally, before the network device sends the configuration information and/or the first indication information, the network device may further obtain capability information from the terminal device, so that the network device learns, based on the capability information, whether the terminal device has a capability of identifying redundant information (which may also be understood as whether the terminal device can determine a dynamic packet discarding ratio for the current service), for example, whether the terminal device can identify redundancy information in the RTP header. After the network device determines that the terminal device has the capability of identifying the redundancy degree information, the network device then instructs the terminal device to perform packet discarding, thereby avoiding invalid indication from the network device, and thereby improving system performance.

S1008: The terminal device reports capability information to the network device, where the capability information indicates whether the terminal device has the capability of identifying the redundancy degree information.

Specifically, when the capability information indicates that the terminal device has the capability of identifying the redundancy degree information, the capability information can notify the network device that the terminal device can determine a dynamic packet discarding ratio for the current service. The capability information may also be at a UE/PDU session/DRB/QoS flow level. Optionally, the capability information may be sent to the network device by using an RRC message.

Optionally, before the network device sends the one or more pieces of first indication information to the terminal device, the terminal device may further send second indication information to the network device, where the second indication information is used to notify the network device to provide the first assistance information. After receiving the second indication information, the network device monitors network congestion. When the congestion occurs, the network device sends the first indication information or the first indication information and the first assistance information to the terminal device. When the network device further sends the first assistance information, the terminal device may determine, based on the first assistance information, whether to discard the data packet according to the data packet discarding ratio. This process includes the following steps:
S1009: The terminal device sends second indication information to the network device, where the second indication information indicates the network device to provide the first assistance information, and the first assistance information is used by the terminal device to determine whether to discard the data packet according to the data packet discarding ratio.

Specifically, the terminal device sends the second indication information to the network device, and correspondingly, the network device receives the second indication information.

S1010: A network device sends first assistance information to a terminal device.

Optionally, the first assistance information includes one or more of congestion degree information, air interface quality information, packet discarding activation suggestion information, and packet discarding policy suggestion information. The congestion degree information indicates a degree of link congestion between the network device and the terminal device, the air interface quality information indicates air interface quality between the network device and the terminal device, the packet discarding activation suggestion information indicates whether the network device suggests the terminal device to discard a data packet according to a packet discarding ratio, and the data packet discarding policy suggestion information indicates that the terminal device discards the data packet according to a packet discarding policy suggested by the network device. Specifically, the terminal device may determine, based on one or more of the congestion degree information, the air interface quality information, the packet discarding activation suggestion information, and the data packet discarding policy suggestion information, whether to discard a data packet according to a packet discarding ratio. The terminal device determines to discard a data packet according to the data packet discarding ratio when the first assistance information indicates at least one of the following: a degree of link congestion between the network device and the terminal device is relatively high, air interface quality between the network device and the terminal device is relatively poor, the network device suggests the terminal device to discard a data packet according to a packet discarding ratio, or the data packet discarding policy suggested by the network device.

It should be noted that when the network device sends the first assistance information and the first indication information to the terminal device, an order of S1007 and S1010 is not limited in this application. For example, when the first assistance information carries a packet discarding policy (other information in the first assistance information may or may not carry the data packet discarding policy), the network device may first indicate to start packet discarding, and then send the recommended packet discarding policy to the terminal device by using the first assistance information; or the network device may first send the first indication information indicating to start packet discarding, and then send the recommended packet discarding policy to the terminal device by using the first assistance information; or the network device may send both the recommended packet discarding policy and the first indication information to the terminal device at the same time, where the first assistance information and the first indication information may be carried in a same message or in two separate messages.

It may be understood that, in the foregoing S1007 to S1010, the network device sends the first assistance information and the first indication information to the terminal device. In some embodiments, the network device may send only the first assistance information or only the first indication information to the terminal device, which is not limited in this application. Specifically, when the network device sends only the first assistance information to the terminal device, the method 1000 includes only S1009 and S1010; or when the network device sends only the first indication information to the terminal device, the method 1000 includes S1006.

It may also be understood that the foregoing S1007 to S1010 are scenarios in which the terminal device determines to discard packets based on a packet discarding ratio. When the assistance information sent by the network device to the terminal device indicates at least one of the following, the terminal device does not perform packet discarding: a degree of link congestion between the network device and the terminal device is relatively low, quality of an air interface between the network device and the terminal device is relatively good, or the network device does not recommend the terminal device to discard a data packet based on a packet discarding ratio.

When the packet discarding indication is also effective for a subsequent received data packet set, optionally, the network device may further instruct the terminal device to stop packet discarding, for example, instruct the terminal device to stop packet discarding when detecting that the congestion disappears. In this case, the method 1000 may further include S1011.

S1011: The network device sends third indication information to the terminal device, where the third indication information instructs the terminal device to stop discarding packets.

It should be noted that the third indication information may also be referred to as deactivation information for packet discarding based on a ratio, or the like, which is not limited in this application.

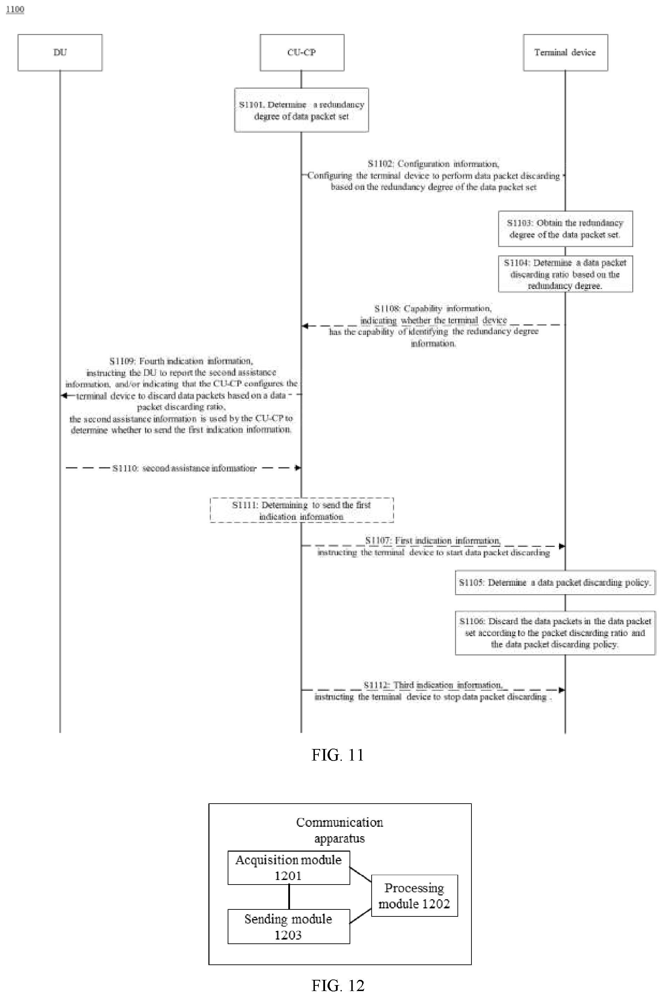

In some embodiments, when the network device is a base station and adopts a CU/DU separation architecture or a CU-CP/CU-UP architecture, Figure 11 illustrates a schematic flowchart of a fourth method 1100 for processing packets according to an embodiment of this application. As shown in Figure 11, this schematic flowchart is illustrated by using an example of interaction between a CU-CP and a DU, where the steps performed by the CU-CP and/or the DU may be executed by modules or units within the CU-CP and/or the DU, for example, by a chip within the CU-CP and/or the DU. Specifically, the method includes the following multiple steps.

S1101: The CU-CP determines that there is redundancy in the data packet set.

Optionally, the CU-CP may obtain application information about network coding from the core network. Specifically, the CU-CP receives notification information from a core network device, where the notification information indicates whether network coding (e.g., FEC coding) is used for the data packet set and/or indicates whether redundancy exists in the data packet set. For example, the CU-CP receives a PDU SESSION SETUP/MODIFICATION REQUEST message from the SMF, wherein the message includes a 1-bit indication field for carrying the notification information indicating whether network coding is used for the data packet set or whether redundancy exists, where "0" indicates that network coding is not used or no redundancy exists, and "1" indicates that network coding is used or redundancy exists. Alternatively, the message may include a 2-bit indication field for carrying the notification information indicating whether network coding is used for the data packet set and whether redundancy exists, where "00" indicates that network coding is not used and no redundancy exists, "01" indicates that network coding is not used but redundancy exists,

Similarly, the data packets included in the data packet set may be some or all data packets in one or more PDU sets generated by the PDU set grouping, which is not limited in this application. It may be understood that for other related descriptions of the data packet set, for example, importance of the data packet set, importance determining, and an entity determining the importance of the data packet set, refer to S701 in FIG. 7 or S1001 in FIG. 10, and details are not described herein again.

It should be noted that FIG. 11 is merely an embodiment of a network device provided in this application under a split architecture, and does not constitute a limitation on the protection scope of this application. In some other embodiments, the CU-UP may alternatively receive the notification information from the core network, and determine, based on the notification information, that the data packet set has redundancy.

S1102: The CU-CP sends configuration information to the terminal device, to configure the terminal device to discard the data packet based on the redundancy degree of the data packet set.

Specifically, after receiving the configuration information, the terminal device may learn, based on the configuration information, that a data packet needs to be discarded according to the redundancy degree of the data packet set.

S1103: The terminal device obtains the redundancy degree of the data packet set.

S1104: The terminal device determines the data packet discarding ratio based on the redundancy degree.

S1105: The terminal device determines a packet discarding policy.

S1106: The terminal device discards the data packets in the data packet set based on the data packet discarding ratio and the data packet discarding policy.

Specifically, for S1103 to S1106, refer to S1003 to S1006 in FIG. 10, and details are not described herein again.

It should be noted that, in the procedure from S1101 to S1106, after the terminal device determines the data packet discarding ratio and the data packet discarding policy, the terminal device starts to discard data packets. In other words, when the terminal device discards the data packets in the data packet set according to the data packet discarding ratio and the data packet discarding policy, it may be considered that the configuration information received by the terminal device indicates the terminal device to start packet discarding while instructing the terminal device to perform packet discarding based on the redundancy degree of the data packets.

It may be understood that, in some scenarios, the configuration information received by the terminal device may be sent by the CU-CP to the terminal device when network congestion occurs, and in this case, the terminal device may perform packet discarding according to the ratio. In some other scenarios, the configuration information is preconfigured by the CU-CP for the terminal device. In this case, after receiving the configuration information, the terminal device does not immediately perform packet discarding, and the terminal device performs packet discarding according to the ratio only when network congestion occurs. Therefore, to ensure stability of system performance, the first indication information may be used to indicate the terminal device to start packet discarding. In this case, the method 1100 further includes the following steps.

S1107: The CU-CP sends first indication information to the terminal device, instructing the terminal device to start packet discarding.

Optionally, the CU-CP sends the first indication information to the terminal device by using RRC signaling. The first indication information may indicate only that the terminal device starts packet discarding, or may further indicate a packet discarding policy of the terminal device. In addition, there may be one or more pieces of first indication information, and the first indication information may further carry identification information corresponding to a data packet set, and the like. Specifically, for details of this step, refer to the foregoing S1007. Details are not described herein again.

Optionally, before sending the first indication information and/or the configuration information, the CU-CP may further obtain capability information from the terminal device, so that the CU-CP learns, based on the capability information, whether the terminal device has a capability of identifying redundant information (which may also be understood as whether the terminal device can determine a dynamic packet discarding ratio for a current service), for example, whether the terminal device can identify redundancy information in an RTP header. After the CU-CP determines that the terminal device has the capability of identifying the redundancy degree information, the CU-CP then instructs the terminal device to perform packet discarding, thereby avoiding an invalid instruction from the CU-CP, and thereby improving system performance.

S1008: The terminal device reports capability information to the CU-CP, where the capability information indicates whether the terminal device has the capability of identifying redundancy information.

Specifically, when the capability information indicates that the terminal device has the capability of identifying redundancy information, the capability information can notify the CU-CP that the terminal device can determine a dynamic packet discarding ratio for the current service. The capability information may also be at a UE/PDU session/DRB/QoS flow level. Optionally, the capability information may be sent to the CU-CP through an RRC message.

Optionally, before the CU-CP sends the one or more first pieces of indication information to the terminal device, the CU-CP may further send fourth indication information to the DU, where the fourth indication information is used to notify the DU that packet discarding based on a proportion has been configured and/or is used to notify the DU to provide the second assistance information. After receiving the fourth indication information, the DU monitors network congestion. When congestion occurs, the DU sends the second assistance information to the CU-CP, so that the CU-CP learns that network congestion occurs, and then sends the first indication information to the terminal device. This process includes the following steps:
S1109: The CU-CP sends fourth indication information to the DU, where the fourth indication information indicates the DU to report the second assistance information and/or indicates that the CU-CP has configured the terminal device to discard data packets according to a ratio, where the second assistance information is used by the CU-CP to determine whether to send the first indication information.
Specifically, the CU-CP sends the fourth indication information to the DU, and correspondingly, the DU receives the fourth indication information.

S1110: The DU sends the second assistance information to the CU-CP.

Specifically, after receiving the fourth indication information, the DU sends the second assistance information to the CU-CP. Optionally, the second assistance information includes one or more of congestion degree information, air interface quality information, packet discarding activation suggestion information, and packet discarding policy suggestion information. The congestion degree information indicates a degree of link congestion between the CU-CP and the terminal device. The air interface quality information indicates air interface quality between the CU-CP and the terminal device. The packet discarding activation suggestion information indicates whether the DU suggests the terminal device to discard the data packets according to the data packet discarding ratio. The data packet discarding policy suggestion information indicates the terminal device to discard the data packets according to the data packet discarding policy suggested by the DU.

S1111: The CU-CP determines to send the first indication information.

Specifically, the CU-CP determines to send the first indication information based on one or more of the congestion degree information, the air interface quality information, the packet discarding activation advice information, and the data packet discarding policy advice information. Specifically, when the second assistance information indicates at least one of the following, the CU-CP determines to send the first indication information: the link between the CU-CP and the terminal device is in a relatively high degree of congestion, the air interface quality between the CU-CP and the terminal device is relatively poor, the DU advises the terminal device to discard a data packet according to a packet discarding ratio, and the DU advises a packet discarding policy.

It may be understood that when the second assistance information includes the data packet discarding policy advice information (the second assistance information may include other information or may not include other information), the CU-CP may add the advised packet discarding policy to the first indication information, so that after receiving the first indication information, the terminal device may perform packet discarding according to the advised packet discarding policy.

It may be further understood that S1107 to S1111 are scenarios in which the CU-CP determines to send the first indication information, or S1107 to S1111 are scenarios in which the terminal device discards a packet according to a proportion. When the second assistance information reported by the DU to the CU-CP indicates at least one of the following, the CU-CP does not send the first indication information: A link between the CU-CP and the terminal device has a relatively low congestion degree, an air interface between the CU-CP and the terminal device has relatively good quality, and the DU suggests that the terminal device not discard the data packet according to the data packet discarding ratio. In this case, the terminal device may not perform proportional packet discarding.

It should be noted that, in some other embodiments, the CU-UP or the DU may further send the first indication information to the terminal device. For example, when the CU-UP sends the first indication information to the terminal device, the first indication information may be carried in a PDCP-controlled PDU. When the DU sends the first indication information to the terminal device, the first indication information may be carried in the MAC CE. Optionally, when the data packet discarding ratio information is sent by the CU-CP or the CU-UP, the first indication information is sent by the DU. When the first indication information is sent by the DU, the CU-CP or the CU-UP may further send fifth indication information to the DU, where the fifth indication information instructs the DU to send the first assistance information to the terminal device, and/or indicates that the CU-CP configures the terminal device to discard a data packet based on a proportion. The first assistance information is used by the terminal device to determine whether to discard the data packet based on the data packet discarding ratio. The DU learns, by using the fifth indication information, that the terminal device has obtained the data packet discarding ratio, and may perform packet discarding. Therefore, when detecting network congestion, the DU sends the first indication information to the terminal device to instruct the terminal device to start packet discarding. In addition, in some other embodiments, after the CU-CP or the CU-UP sends the fifth indication information to the DU, the DU may further send the first indication information and the first assistance information to the terminal device, or send only the first assistance information.

When the packet discarding indication is also effective for a subsequent set of arriving data packets, optionally, the CU-CP or the DU may further instruct the CU-UP to stop packet discarding, for example, instruct to stop packet discarding when detecting that the congestion disappears. In this case, the method 1100 may further include S1112.

S1112: The CU-CP sends third indication information to the terminal device, where the third indication information instructs the terminal device to stop packet discarding.

It should be noted that the first indication information indicating to start packet discarding may also be referred to as packet discarding activation information based on a ratio, or the like, and the third indication information indicating to stop packet discarding may also be referred to as packet discarding deactivation information based on a ratio, or the like. This is not limited in this application.

It should be further noted that the third indication information may also be referred to as packet discarding deactivation information based on a ratio, or the like. This is not limited in this application.

It should be further noted that, in some other embodiments, the third indication information may alternatively be sent by the CU-UP or the DU to the terminal device. This is not limited in this application.

It should be understood that the embodiments in FIG. 7 and FIG. 9 to FIG. 11 in this embodiment of this application are merely examples for description. The illustration in the figures does not limit an execution sequence. A person skilled in the art may flexibly adjust the sequence of the steps based on the examples in the figures. In addition, the sequence numbers of the foregoing processes do not mean an execution sequence, and the execution sequence of the processes should be determined based on functions and internal logic of the processes. In addition, the foregoing steps are not mandatory steps. If the problem to be resolved in this application can be resolved when one or more of the steps are missing, the corresponding technical solutions also fall within the scope disclosed in this application. The various numbers or sequence numbers used in the foregoing processes are merely for differentiation for ease of description, and should not constitute any limitation on the implementation process of the embodiments of this application.

It may be understood that some optional features in the embodiments of this application may be independently implemented in some scenarios without depending on other features, for example, without depending on a solution on which the optional features are currently based, thereby resolving corresponding technical problems and achieving corresponding effects. Alternatively, in some scenarios, these optional features may be combined with other features based on requirements. Correspondingly, the apparatus provided in the embodiments of this application may also implement these features or functions accordingly, and details are not described herein again.

In addition, the solutions of the embodiments of this application may be reasonably combined and used, and the explanations or descriptions of the terms appearing in the embodiments may be mutually referenced or explained among the embodiments, which is not limited thereto.

In the foregoing embodiments provided in this application, the solutions of the communication method provided in the embodiments of this application are respectively described from the perspective of each device/net element itself and from the perspective of interaction between the devices/net elements. It may be understood that, in order to implement the foregoing functions, each network element and device includes a corresponding hardware structure and/or software module for performing each function. A person skilled in the art should easily realize that, in combination with the units and algorithm steps of the examples described in the embodiments disclosed in this specification, this application can be implemented through hardware or a combination of hardware and computer software. Whether a function is performed through hardware or hardware driven by computer software depends on particular applications and design constraints of the technical solutions. A person of ordinary skill in the art can use different methods to implement the described functions for each particular application, but such implementation should not be considered as beyond the scope of this application.

FIG. 12 is a schematic block diagram of a communication apparatus 1200 according to an embodiment of this application. The apparatus 1200 includes an obtaining module 1201, which may be configured to implement a corresponding obtaining function. The obtaining module 1201 may also be referred to as an obtaining unit.

The apparatus 1200 further includes a processing module 1202, which may be configured to implement a corresponding processing function.

The apparatus 1200 further includes a sending module 1203, which may be configured to implement a corresponding sending function, and the sending module 1203 may also be referred to as a sending unit.

Optionally, the apparatus 1200 further includes a storage unit, where the storage unit may be configured to store instructions and/or data. The processing module 1202 may read the instructions and/or the data in the storage unit, so that the apparatus implements actions of the related apparatuses in the foregoing method embodiments.

The apparatus 1200 may be configured to perform the actions performed by the terminal device or the network device in the foregoing method embodiments. In this case, the apparatus 1200 may be a component of the terminal device or the network device. The obtaining module 1201 is configured to perform an obtaining-related operation performed by the terminal device or the network device in the foregoing method embodiments. The processing module 1202 is configured to perform a processing-related operation performed by the terminal device or the network device in the foregoing method embodiments. The sending module 1203 is configured to perform a sending-related operation performed by the terminal device or the network device in the foregoing method embodiments.

As a design, the apparatus 1200 is configured to perform the actions performed by any network element or any device in the method embodiments mentioned above. In an embodiment, the communication apparatus may be used to perform the operations of the terminal device in the foregoing FIG. 7, FIG. 9, to FIG. 11. For example:
The obtaining module 1201 is configured to obtain a packet discarding ratio.

The processing module 1202 is configured to determine a packet discarding policy, and discard a data packet in a data packet set based on a packet discarding ratio and the data packet discarding policy.

The sending module 1203 is configured to send capability information to a network device, where the capability information indicates whether the terminal device has the capability to identify redundancy information.

It should be understood that the specific processes by which each module performs the corresponding steps have been described in detail in the foregoing method embodiments. For brevity, these processes will not be repeated herein.

In addition, the obtaining module 1201, the processing module 1202, and the sending module 1203 in the communication apparatus may further implement other operations or functions of the terminal device in the foregoing methods, which are not further described herein.

In another embodiment, the communication apparatus may be configured to perform operations of the network device in FIG. 7 and FIG. 9 to FIG. 11. For example:
The obtaining module 1201 is configured to obtain a redundancy degree of a data packet set.

The processing module 1202 is configured to determine a packet discarding ratio based on the redundancy degree, where the data packet discarding ratio is used to discard a data packet.

The sending module 1203 is configured to send packet discarding ratio information to the terminal device, where the data packet discarding ratio information indicates the data packet discarding ratio, and the data packet discarding ratio information configures the terminal device to discard the data packet based on the data packet discarding ratio.

The obtaining module 1201, the processing module 1202, and the sending module 1203 in the communication apparatus may further implement other operations or functions of the network device in the foregoing method, and details are not described herein again.

It should be understood that a specific process in which each module performs the foregoing corresponding steps has been described in detail in the foregoing method embodiments. For brevity, details are not described herein again.

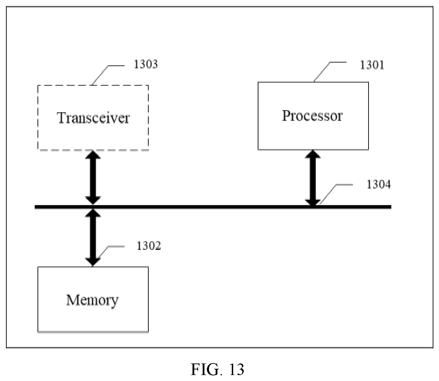

FIG. 13 illustrates another possible schematic structural diagram of the communication apparatus according to the foregoing embodiments. The communication apparatus includes a processor 1301. As shown in FIG. 13, the communication apparatus may further include at least one memory 1302, configured to store program instructions and/or data. The memory 1302 is coupled to the processor 1301. The coupling in this embodiment of this application is an indirect coupling or a communication connection between apparatuses, units, or modules, and may be an electrical, mechanical, or another form, and is used for information exchange between the apparatuses, units, or modules. The processor 1301 may operate in collaboration with the memory 1302. The processor 1301 may execute the program instructions stored in the memory 1302. At least one of the at least one memory may be included in the processor.

The communication apparatus may further include a transceiver 1303, configured to communicate with another device through a transmission medium, so that the apparatus can communicate with another device. Optionally, the transceiver 1303 may be an interface, a bus, a circuit, or an apparatus that can implement a receiving and sending function. Optionally, the transceiver 1303 may include a receiver and a transmitter.

A specific connection medium between the processor 1301, the memory 1302, and the transceiver 1303 is not limited in this embodiment of this application. In this embodiment of this application, the processor 1301, the memory 1302, and the transceiver 1303 are connected through a bus 1304 in FIG. 13. The bus is represented by a thick line in FIG. 13. A connection manner between other components is merely an example for description, and is not intended to be limiting. The bus may be classified into an address bus, a data bus, a control bus, or the like. For ease of representation, only one thick line is used to represent the bus in FIG. 13, but this does not indicate that there is only one bus or only one type of bus.

For example, in one embodiment, the processor 1301 is configured to perform other operations or functions of the terminal device. The transceiver 1303 is configured to enable communication between the communication apparatus and other network elements/devices (e.g., network equipment).

In another embodiment, the processor 1301 is configured to perform other operations or functions of the network device. The transceiver 1303 is configured to enable communication between the communication apparatus and other network elements/devices (e.g., terminal equipment).

One or more of the above modules or units may be implemented through software, hardware, or a combination of both. When any of the above modules or units is implemented through software, the software exists in the form of computer program instructions and is stored in a memory, where a processor may be configured to execute the program instructions and implement the method flow described above. The processor may include, but is not limited to, at least one of the following: a central processing unit (CPU), a microprocessor, a digital signal processor (DSP), a microcontroller unit (MCU), or an artificial intelligence processor, and other types of computing devices capable of running software, each of which may include one or more cores configured to execute software instructions for performing computations or processing. The processor may be built into a system-on-a-chip (SoC) or an application-specific integrated circuit (ASIC), or may be an independent semiconductor chip. In addition to the core within the processor that processes software instructions for performing computations or processing, the processor may further include necessary hardware accelerators, such as a field programmable gate array (FPGA), a programmable logic device (PLD), or a logic circuit that implements dedicated logic operations.

When the foregoing modules or units are implemented by hardware, the hardware may be any one or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device, and may run necessary software or perform the foregoing method procedures without depending on software.

When the foregoing modules or units are implemented by software, they may be implemented entirely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like.

The foregoing specific implementations further describe the objectives, technical solutions, and beneficial effects of this application in detail. It should be understood that the foregoing descriptions are merely specific implementations of this application, but are not intended to limit the protection scope of this application. Any modification, equivalent replacement, or improvement made based on the technical solutions of this application shall fall within the protection scope of this application.

According to the method provided in the embodiments of this application, this application further provides a computer program product. The computer program product includes computer program code. When the computer program code is run on a computer, the computer is enabled to perform the method on the terminal device side in the foregoing method embodiments.

According to the method provided in the embodiments of this application, this application further provides a computer program product. The computer program product includes computer program code. When the computer program code is run on a computer, the computer is enabled to perform the method on the network device side in the foregoing method embodiments.

According to the method provided by the embodiments of this application, this application further provides a computer-readable medium, where the computer-readable medium stores program code, and when the program code is run on a computer, the computer is enabled to perform the method on the terminal device side in the foregoing method embodiments.

According to the method provided by the embodiments of this application, this application further provides a computer-readable medium, where the computer-readable medium stores program code, and when the program code is run on a computer, the computer is enabled to perform the method on the network device side in the foregoing method embodiments.

An embodiment of this application further provides a processing apparatus, including a processor and an interface, where the processor is configured to perform the communication method in any one of the foregoing method embodiments.

A person of ordinary skill in the art may be aware that, in combination with the examples described in the embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art can use different methods to implement the described functions for each particular application, but such implementation should not be considered as beyond the scope of this application.

A person skilled in the art may clearly understand that, for the purpose of convenient and brief description, for a detailed working process of the foregoing described system, apparatus, and unit, refer to a corresponding process in the foregoing method embodiments, and details are not described herein again.

In the embodiments provided in this application, it should be understood that the disclosed systems, apparatuses, and methods may be implemented in other ways. For example, the foregoing apparatus embodiments are merely examples. For example, the division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one place, or may be distributed on a plurality of network units. Some or all of the units may be selected according to an actual need to achieve the objectives of the solutions in the embodiments.

In addition, the functional units in embodiments of this application may be integrated into one processing unit, each of the units may exist alone physically, or two or more units may be integrated into one unit.

When the functions are implemented in the form of software functional units and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined according to the protection scope of the claims.

## Claims

1. A data packet processing method, performed by a terminal device or a component of the terminal device, comprising:
obtaining a data packet discarding ratio;
determining a data packet discarding policy; and
performing data packet discarding from data packet set(s) based on the data packet discarding ratio and the data packet discarding policy.

2. The method according to claim 1, wherein the data packet discarding policy is:
discarding data packet(s) from low-importance data packet set(s) of the data packet set(s), corresponding to the data packet discarding ratio; or
discarding data packet(s) from high-importance data packet set(s) of the data packet set(s), corresponding to the data packet discarding ratio; or
discarding data packet(s) from high-importance data packet set(s) of the data packet set(s), corresponding to the data packet discarding ratio, and discarding all data packet(s) from low-importance data packet set(s) of the data packet set(s); or
discarding data packet(s) from each of the data packet set(s), corresponding to the data packet discarding ratio; or
discarding data packet(s) from high-importance data packet set(s) of the data packet set(s), corresponding to a first data packet discarding ratio, and discarding data packet(s) from low-importance data packet set(s) of the data packet set(s), corresponding to a second data packet discarding ratio, wherein the first data packet discarding ratio and the second data packet discarding ratio belong to the data packet discarding ratio.

3. The method according to claim 1 or 2, wherein the obtaining a data packet discarding ratio comprises:
receiving data packet discarding ratio information from a network device, wherein the data packet discarding ratio information indicates the data packet discarding ratio.

4. The method according to claim 1 or 2, wherein the obtaining a data packet discarding ratio comprises:
receiving configuration information from a network device, wherein the configuration information configures the terminal device or the component of the terminal device to perform data packet discarding based on a redundancy degree of the data packet set(s);
obtaining the redundancy degree; and
determining the data packet discarding ratio based on the redundancy degree.

5. The method according to claim 4, wherein the obtaining the redundancy degree comprises:
receiving redundancy degree information from an application layer, wherein the redundancy degree information indicates the redundancy degree; and
determining the redundancy degree based on the redundancy degree information.

6. The method according to claim 4 or 5, wherein the data packet discarding ratio is less than or equal to the redundancy degree.

7. The method according to any one of claims 4 to 6, further comprising:
reporting capability information to the network device, wherein the capability information indicates whether the terminal device or the component of the terminal device has a capability of identifying the redundancy degree information.

8. The method according to any one of claims 1 to 7, further comprising:
receiving first indication information from a network device, wherein the first indication information indicates the terminal device or the component of the terminal device to start data packet discarding.

9. The method according to claim 8, wherein the first indication information further indicates the data packet discarding policy, and the determining a data packet discarding policy comprises:
determining a data packet discarding policy based on the first indication information.

10. The method according to any one of claims 1 to 9, further comprising:
receiving, from the network device, identifier information corresponding to the data packet set(s), wherein the identifier information is at least one of: a session identifier of a protocol data unit PDU session corresponding to the data packet set(s), a flow identifier of a quality of service QoS flow corresponding to the data packet set(s), and an identifier of a data radio bearer DRB corresponding to the data packet set(s).

11. A data packet processing method, comprising:
obtaining, by a network device, a redundancy degree of data packet set(s);
determining, by the network device, a data packet discarding ratio based on the redundancy degree, wherein the data packet discarding ratio is used for data packet discarding; and
sending, by the network device, data packet discarding ratio information to a terminal device, wherein the data packet discarding ratio information indicates the data packet discarding ratio, and the data packet discarding ratio information configures the terminal device to perform data packet discarding based on the data packet discarding ratio.

12. The method according to claim 11, wherein the data packet discarding ratio is less than or equal to the redundancy degree.

13. The method according to claim 11 or 12, further comprising:
sending, by the network device, first indication information to the terminal device, wherein the first indication information indicates the terminal device to start data packet discarding.

14. The method according to claim 13, wherein the first indication information further indicates a data packet discarding policy.

15. The method according to claim 14, wherein the data packet discarding policy is:
discarding data packet(s) from low-importance data packet set(s) of the data packet set(s), corresponding to the data packet discarding ratio; or
discarding data packet(s) from high-importance data packet set(s) of the data packet set(s), corresponding to the data packet discarding ratio; or
discarding data packet(s) from high-importance data packet set(s) of the data packet set(s), corresponding to the data packet discarding ratio, and discarding all data packet(s) from low-importance data packet set(s) of the data packet set(s); or
discarding data packet(s) from each of the data packet set(s), corresponding to the data packet discarding ratio; or
discarding data packet(s) from high-importance data packet set(s) of the data packet set(s), corresponding to a first data packet discarding ratio, and discarding data packet(s) from low-importance data packet set(s) of the data packet set(s), corresponding to a second data packet discarding ratio, wherein the first data packet discarding ratio and the second data packet discarding ratio belong to the data packet discarding ratio.

16. The method according to any one of claims 11 to 15, further comprising:
sending, by the network device to the terminal device, identifier information corresponding to the data packet set(s), wherein the identifier information is at least one of: a session identifier of a protocol data unit PDU session corresponding to the data packet set(s), a flow identifier of a quality of service QoS flow corresponding to the data packet set(s), and an identifier of a data radio bearer DRB corresponding to the data packet set(s).

17. The method according to any one of claims 11 to 16, further comprising:
sending, by the network device, third indication information to the terminal device, wherein the third indication information indicates the terminal device to stop data packet discarding.

18. A data packet processing method, comprising:
determining, by a network device, that a redundancy degree of data packet set(s) exists; and
sending, by a network device, configuration information to a terminal device, wherein the configuration information configures the terminal device to perform data packet discarding based on the redundancy degree of the data packet set(s), the redundancy degree is used to determine a data packet discarding ratio, and the data packet discarding ratio is used for data packet discarding.

19. The method according to claim 18, wherein the data packet discarding ratio is less than or equal to the redundancy degree.

20. The method according to claim 18 or 19, further comprising:
receiving, by the network device, capability information from the terminal device, wherein the capability information indicates whether the terminal device has a capability of identifying redundancy degree information.

21. The method according to any one of claims 18 to 20, further comprising:
sending, by the network device, first indication information to the terminal device, wherein the first indication information indicates the terminal device to start data packet discarding.

22. The method according to claim 21, wherein the first indication information further indicates a data packet discarding policy.

23. The method according to claim 22, wherein the data packet discarding policy is:
discarding data packet(s) from low-importance data packet set(s) of the data packet set(s), corresponding to the data packet discarding ratio; or
discarding data packet(s) from high-importance data packet set(s) of the data packet set(s), corresponding to the data packet discarding ratio; or
discarding data packet(s) from high-importance data packet set(s) of the data packet set(s), corresponding to the data packet discarding ratio, and discarding all data packet(s) from low-importance data packet set(s) of the data packet set(s); or
discarding data packet(s) from each of the data packet set(s), corresponding to the data packet discarding ratio; or
discarding data packet(s) from high-importance data packet set(s) of the data packet set(s), corresponding to a first data packet discarding ratio, and discarding data packet(s) from low-importance data packet set(s) of the data packet set(s), corresponding to a second data packet discarding ratio, wherein the first data packet discarding ratio and the second data packet discarding ratio belong to the data packet discarding ratio.

24. The method according to any one of claims 18 to 23, further comprising:
sending, by the network device to the terminal device, identifier information corresponding to the data packet set(s), wherein the identifier information is at least one of: a session identifier of a protocol data unit PDU session corresponding to the data packet set(s), a flow identifier of a quality of service QoS flow corresponding to the data packet set(s), and an identifier of a data radio bearer DRB corresponding to the data packet set(s).

25. The method according to any one of claims 18 to 24, further comprising:
sending, by the network device, third indication information to the terminal device, wherein the third indication information indicates the terminal device to stop data packet discarding.

26. A communication apparatus, comprising:
a unit or module configured to implement the method according to any one of claims 1 to 10, or
a unit or module configured to implement the method according to any one of claims 11 to 17, or
a unit or module configured to implement the method according to any one of claims 18 to 25.

27. A communication system, comprising: a first communication apparatus and a second communication apparatus;
the first communication apparatus is configured to implement the method according to any one of claims 1 to 10;
The second communication apparatus is configured to implement the method according to any one of claims 11 to 17, or configured to implement the method according to any one of claims 18 to 25.

28. A computer-readable storage medium, wherein the computer-readable storage medium stores computer instructions, and when the computer instructions are run on a first communication apparatus, the first communication apparatus is enabled to perform the method according to any one of claims 1 to 10; or when the computer instructions are run on a second communication apparatus, the second communication apparatus is enabled to perform the method according to any one of claims 11 to 17, or the second communication apparatus is enabled to perform the method according to any one of claims 18 to 25.

29. A chip system, comprising: wherein the chip includes a processor and a communication interface, the processor reads an instruction and runs the instruction through the communication interface; and when the chip is installed in a first communication apparatus, the first communication apparatus is enabled to perform the method according to any one of claims 1 to 10; or when the chip is installed in a second communication apparatus, the second communication apparatus is enabled to perform the method according to any one of claims 11 to 17, or the second communication apparatus is enabled to perform the method according to any one of claims 18 to 25.
